(19) Europäisches Patentamt / European Patent Office / Office européen des brevets

(11) **EP 4 616 646 B1**

(12) # EUROPEAN PATENT SPECIFICATION


(45) Date of publication and mention of the grant of the patent: **26.08.2026 Bulletin 2026/35**

(21) Application number: **23801948.3**

(22) Date of filing: **02.11.2023**

(51) International Patent Classification (IPC): ***H04W 52/02*** *(2009.01)*

(52) Cooperative Patent Classification (CPC): **H04W 52/0219; H04W 52/0235;** Y02D 30/70

(86) International application number: **PCT/SE2023/051108**

(87) International publication number: **WO 2024/102049 (16.05.2024 Gazette 2024/20)**


(54) **USER EQUIPMENT, NETWORK NODE AND METHODS IN A WIRELESS COMMUNICATIONS NETWORK**

BENUTZERGERÄT, NETZWERKKNOTEN UND VERFAHREN IN EINEM DRAHTLOSKOMMUNIKATIONSNETZWERK

ÉQUIPEMENT UTILISATEUR, NOEUD DE RÉSEAU ET PROCÉDÉS DANS UN RÉSEAU DE COMMUNICATIONS SANS FIL


(84) Designated Contracting States: **AL AT BE BG CH CY CZ DE DK EE ES FI FR GB GR HR HU IE IS IT LI LT LU LV MC ME MK MT NL NO PL PT RO RS SE SI SK SM TR**

(30) Priority: **07.11.2022 US 202263382555 P**

(43) Date of publication of application: **17.09.2025 Bulletin 2025/38**



(73) Proprietor: **Telefonaktiebolaget LM Ericsson (publ)**
**164 83 Stockholm (SE)**

(72) Inventors:
- **HÖGLUND, Andreas**
  **170 62 SOLNA (SE)**
- **FELTRIN, Luca**
  **171 47 SOLNA (SE)**
- **MOZAFFARI, Mohammad**
  **FREMONT, California 94555 (US)**

(74) Representative: **Ericsson Patent Development**
**Torshamnsgatan 21-23**
**164 80 Stockholm (SE)**



(56) References cited:
**CN-A- 110 536 382**

- **NTT DOCOMO ET AL: "UE-group wake-up signal for Rel.16 IoT", vol. RAN WG1, no. Chengdu, China; 20181008 - 20181012, 29 September 2018 (2018-09-29), XP051518789, Retrieved from the Internet <URL:http://www.3gpp.org/ftp/tsg%5Fran/WG1%5FRL1/TSGR1%5F94b/Docs/R1%2D1811385%2Ezip> [retrieved on 20180929]**



Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



EP 4 616 646 B1

## Description

TECHNICAL FIELD

Embodiments herein relate to a network node, a user equipment device and methods therein. In some aspects, they relate to handling wake-up signaling for waking up a UE or a subgroup of UEs in a group of UEs in a wireless communications network..

BACKGROUND

In a typical wireless communication network, wireless devices, also known as wireless communication devices, mobile stations, stations (STA) and/or User Equipments (UE)s, communicate via a Wide Area Network or a Local Area Network such as a Wi-Fi network or a cellular network comprising a Radio Access Network (RAN) part and a Core Network (CN) part. The RAN covers a geographical area which is divided into service areas or cell areas, which may also be referred to as a beam or a beam group, with each service area or cell area being served by a radio network node such as a radio access node e.g., a Wi-Fi access point or a radio base station (RBS), which in some networks may also be denoted, for example, a NodeB, eNodeB (eNB), or gNB as denoted in Fifth Generation (5G) telecommunications. A service area or cell area is a geographical area where radio coverage is provided by the radio network node. The radio network node communicates over an air interface operating on radio frequencies with the wireless device within range of the radio network node.

3GPP is the standardization body for specify the standards for the cellular system evolution, e.g., including 3G, 4G, 5G and the future evolutions. Specifications for the Evolved Packet System (EPS), also called a Fourth Generation (4G) network, have been completed within the 3rd Generation Partnership Project (3GPP). As a continued network evolution, the new releases of 3GPP specifies a 5G network also referred to as 5G New Radio (NR).

Frequency bands for 5G NR are being separated into two different frequency ranges, Frequency Range 1 (FR1) and Frequency Range 2 (FR2). FR1 comprises sub-6 GHz frequency bands. Some of these bands are bands traditionally used by legacy standards but have been extended to cover potential new spectrum offerings from 410 MHz to 7125 MHz FR2 comprises frequency bands from 24.25 GHz to 52.6 GHz. Bands in this millimeter wave range have shorter range but higher available bandwidth than bands in the FR1.

Multi-antenna techniques may significantly increase the data rates and reliability of a wireless communication system. For a wireless connection between a single user, such as UE, and a base station, the performance is in particular improved if both the transmitter and the receiver are equipped with multiple antennas, which results in a Multiple-Input Multiple-Output (MIMO) communication channel. This may be referred to as Single-User (SU)-MIMO. In the scenario where MIMO techniques is used for the wireless connection between multiple users and the base station, MIMO enables the users to communicate with the base station simultaneously using the same time-frequency resources by spatially separating the users, which increases further the cell capacity. This may be referred to as Multi-User (MU)-MIMO. Note that MU-MIMO may benefit when each UE only has one antenna. Such systems and/or related techniques are commonly referred to as MIMO.

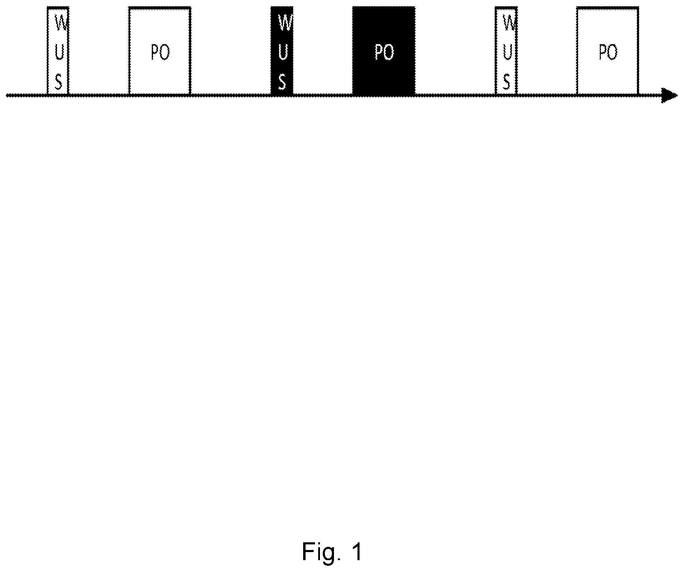

Wake-up receiver (WUR), sometimes also referred to as wake-up radio, is about enabling a low power receiver in UEs, which, in case of the detection of a wake-up signal (WUS), wakes up the main, e.g., baseband and/or higher power, receiver to detect an incoming message, typically paging, e.g., Physical Downlink Control Channel (PDCCH) in paging occasions (PO), scheduling the paging message on Physical Downlink Shared Channel (PDSCH). The main benefit of employing WUR is lowering the energy consumption and a longer device battery life, or at a fixed energy consumption the downlink latency may be reduced, e.g., shorter Discontinuous Reception (DRX) and/or duty-cycles and more frequent checks for incoming transmissions. Figure 1 shows an illustration of the location of a WUS and the paging occasion to which it is associated.

*WUS for NB-IoT and LTE-M*

Release 15 (Rel-15)

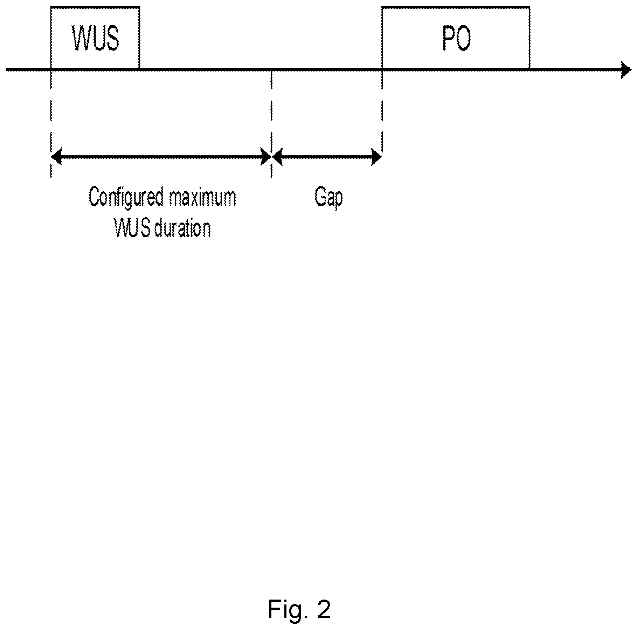

In Rel-15 WUS was specified for Narrowband Internet of Things (NB-IoT) and LTE for Machine Type Communication (LTE-M). The main motivation was UE energy consumption reduction since with the coverage enhancement PDCCH could be repeated many times and the WUS is relatively much shorter and hence requires less reception time for the UE. The logic is that a UE would check for a WUS a certain time before its PO, and only if a WUS is detected the UE would continue to check for PDCCH in the PO. If not, which is most of the time, the UE may go back to a sleep state to conserve energy. Due to the coverage enhancements the WUS can be of variable length depending on the UE's coverage, see Figure 2 which shows an illustration of WUS for NB-IoT and LTE-M.

A WUS is based on the transmission of a short signal that indicates to the UE that it should continue to decode the Downlink (DL) control channel, e.g., full NPDCCH for NB-IoT. If such signal is absent, e.g., during Discontinuous transmission (DTX), i.e., the UE does not detect it, then the UE can go back to sleep without decoding the DL control channel. The decoding time for a WUS is considerably shorter than that of the full NPDCCH since it essentially only needs to contain one bit of information whereas the NPDCCH may contain up to 35 bits of information. This, in turn, reduces UE power consumption and leads to longer UE battery life. The WUS would be transmitted only when there is a paging for the UE. But if there is no paging for the UE then the WUS will not be transmitted, i.e., implying a DTX, and the UE would go back to deep sleep e.g., upon detecting DTX instead of WUS. This is illustrated in Figure 1, where white blocks indicate possible WUS and PO positions whereas the black boxes indicate actual WUS and PO positions.

The specification of Rel-15 WUS is spread out over several parts of the LTE 36-series standard, e.g., 3PGG Technical Specification (TS) 36.211, 3PGG TS 36.213, 3PGG TS 36.304 and 3PGG TS 36.331.

A UE will report its WUS capability and WUS gap capability to the network, see below. Further WUS information was added to the paging message/request from MME to eNB, see UE radio paging capabilities. An eNB will use WUS for paging the UE if 1) WUS is enabled in the cell, i.e., WUS-Config present in System Information (SI), and 2) the UE supports WUS according to the wakeUpSignal-r15 UE capability, see also the description of WUS gap below.

WUS was introduced for both LTE-M and NB-IoT with support for both DRX and eDRX, the former with a 1-to-1 mapping between the WUS and the PO, and for the latter in an addition with the possible configuration of 1-to-N (many) POs. An eNB may configure one WUS gap for UEs using DRX, and another one for UEs using eDRX, see e.g., 3PGG TS 36.331, examples are given for NB-IoT, LTE-M is similar:

WUS-Config-NB information element

```
WUS-Config-NB-r15 ::=        SEQUENCE {
   maxDurationFactor-r15       WUS-MaxDurationFactor-NB-r15,
   numPOs-r15          ENUMERATED {n1, n2, n4}    DEFAULT n1,
   numDRX-CyclesRelaxed-r15       ENUMERATED {n1, n2, n4, n8},

   timeOffsetDRX-r15        ENUMERATED {ms40, ms80, ms160, ms240},
   timeOffset-eDRX-Short-r15       ENUMERATED {ms40, ms80, ms160,
ms240},
   timeOffset-eDRX-Long-r15       ENUMERATED {ms1000, ms2000}
   OPTIONAL,   -- Need OP
   ...
}

WUS-ConfigPerCarrier-NB-r15 ::=          SEQUENCE {
   maxDurationFactor-r15        WUS-MaxDurationFactor-NB-r15
}

WUS-MaxDurationFactor-NB-r15 ::=          ENUMERATED {one128th,
one64th, one32th, one16th,
                                   oneEighth, oneQuarter, oneHalf}
```

| ***WUS-Config-NB* field descriptions** |
|---|
| ***timeOffsetDRX***<br>When DRX is used, non-zero gap from the end of the configured maximum WUS duration to the associated PO, see TS 36.304 [4], clause 7.4 and TS 36.211 [21]. In milliseconds. Value *ms40* corresponds to 40ms, value *ms80* corresponds to 80 ms and so on. |
| ***timeOffset-eDRX-Short*** |

(continued)

| ***WUS-Config-NB* field descriptions** |
|---|
| When eDRX is used, the short non-zero gap from the end of the configured maximum WUS duration to the associated PO, see TS 36.304 [4], clause 7.4 and TS 36.211 [21]. In milliseconds. Value *ms40* corresponds to 40ms, value *ms80* corresponds to 80 ms and so on. E-UTRAN configures *time Offset-eDRX-Short* to a value longer than or equal to *timeOffsetDRX.* |
| ***timeOffset-eDRX-Long***<br>When eDRX is used, the long non-zero gap from the end of the configured maximum WUS duration to the associated PO, see TS 36.304 [4], clause 7.4 and TS 36.211 [21]. In milliseconds. Value *ms1000* corresponds to 1000 ms, value *ms2000* corresponds to 2000 ms. |

The UE capabilities can also indicate the minimum WUS gaps required for the UE to be able to decode PDCCH in the associated PO, for DRX and eDRX, respectively, see 3PGG TS 36.331:

*UE-RadioPagingInfo-NB* information element

```
UE-RadioPagingInfo-NB-r13 ::=   SEQUENCE {
   ue-Category-NB-r13        ENUMERATED {nb1}       OPTIONAL,
   ...,
   [[ multiCarrierPaging-r14            ENUMERATED {true}
   OPTIONAL
   ]],
   [[ mixedOperationMode-r15    ENUMERATED {supported}
   OPTIONAL,
      wakeUpSignal-r15       ENUMERATED {true}      OPTIONAL,
      wakeUpSignalMinGap-eDRX-r15       ENUMERATED {ms40, ms240,
ms1000, ms2000}  OPTIONAL,
      multiCarrierPagingTDD-r15         ENUMERATED {true}
   OPTIONAL
   ]],
   [[ ue-Category-NB-r16                ENUMERATED {nb2}
   OPTIONAL,
      groupWakeUpSignal-r16     ENUMERATED {true}      OPTIONAL,
      groupWakeUpSignalAlternation-r16   ENUMERATED {true}
   OPTIONAL
   ]]
}
```

*wakeUpSignalMinGap-eDRX* indicates the minimum gap the UE supports between WUS or Group WUS (GWUS) and associated POs in case of eDRX in Frequency Division Duplex (FDD), as specified in 3PGG TS 36.304. Value *ms40* corresponds to 40 ms, value *ms240* corresponds to 240 ms and so on. If this field is included, the UE shall also indicate support for WUS or GWUS for paging in DRX.

At the end of Rel-15, a longer WUS gap of 1s or 2s was introduced to enable the use of WUR. That is, starting up the main baseband receiver if a WUR is used for the detection of WUS may take longer time. If this is supported in the cell, an eNB would include timeOffset-eDRX-Long in the WUS-Config in SI, see above. In 3PGG TS 36.304 the UE behavior for monitoring paging with WUS is specified, and in Table 7.4-1 it is indicated which WUS time gap the UE (and eNB) should apply depending on the reported UE capability:

7.4 Paging with Wake Up Signal

Paging with Wake Up Signal is only used in the cell in which the UE most recently entered RRC_IDLE triggered by:

- reception of RRCEarlyDataComplete; or
- reception of RRCConnectionRelease not including noLastCellUpdate; or
- reception of RRCConnectionRelease including noLastCellUpdate and the UE was using (G)WUS in this cell prior to this RRC connection attempt.

If the UE is in RRC_IDLE, the UE is not using GWUS according to clause 7.5 and the UE supports WUS and WUS configuration is provided in system information, the UE shall monitor WUS using the WUS parameters provided in System Information. When DRX is used and the UE detects WUS the UE shall monitor the following PO. When extended DRX is used and the UE detects WUS the UE shall monitor the following numPOs POs or until a paging message including the UE's NAS identity is received, whichever is earlier. If the UE does not detect WUS the UE is not required to monitor the following PO(s). If the UE missed a WUS occasion (e.g. due to cell reselection), it monitors every PO until the start of next WUS or until the PTW ends, whichever is earlier.

- numPOs = Number of consecutive Paging Occasions (PO) mapped to one WUS provided in system information where (numPOs≥1).

The WUS configuration, provided in system information, includes time-offset between end of WUS and start of the first PO of the numPOs POs UE is required to monitor. The timeoffset in subframes, used to calculate the start of a subframe g0 (see TS 36.213 [6]), is defined as follows:

- for UE using DRX, it is the signalled timeoffsetDRX;
- for UE using eDRX, it is the signalled timeoffset-eDRX-Short if timeoffset-eDRX-Long is not broadcasted;
- for UE using eDRX, it is the value determined according to Table 7.4-1 if timeoffset-eDRX-Long is broadcasted

Table 7.4-1: Determination of GAP between end of WUS and associated PO

| | | ***timeoffset-eDRX-Long*** | |
|---|---|---|---|
| | | ***1000ms*** | ***2000ms*** |
| *UE Reported wakeUpSignalMinGap-eDRX* | ***40ms or not reported*** | *timeoffset-eDRX-Short* | *timeoffset-eDRX-Short* |
| | ***240ms*** | *timeoffset-eDRX-Short* | *timeoffset-eDRX-Short* |
| | ***1000ms*** | *timeoffset-eDRX-Long* | *timeoffset-eDRX-Long* |
| | ***2000ms*** | *timeoffset-eDRX-Short* | *timeoffset-eDRX-Long* |

The timeoffset is used to determine the actual subframe g0 as follows (taking into consideration resultant SFN and/or H-SFN wrap-around of this computation):
g0 = PO - timeoffset, where PO is the Paging Occasion subframe as defined in clause 7.1

For UE using eDRX, the same timeoffset applies between the end of WUS and associated first PO of the numPOs POs for all the WUS occurrences for a PTW.

The timeoffset, g0, is used to calculate the start of the WUS as defined in 3PGG TS 36.213.

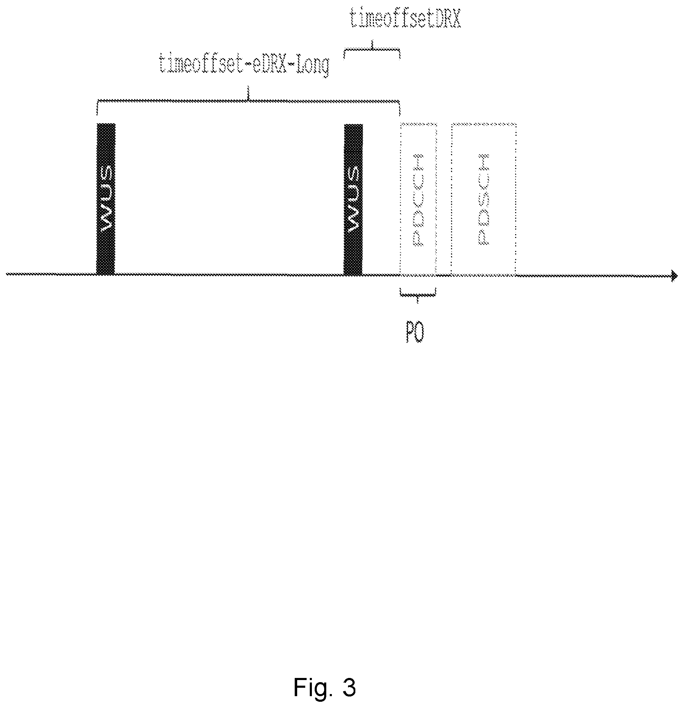

In essence, the UE will only use WUR, or timeOffset-eDRX-Long, if it is capable of starting up the main receiver as quickly as indicated by the value used in SI. If not, it will fall back to using timeOffset-eDRX-Short, without WUR. **Figure 3**

shows an illustration of the use of eDRX and DRX WUS gaps for NB-IoT and LTE-M. Since UEs share PO, the eNB may, in the worst case, have to transmit up to 3 WUSs for one PO. I.e. corresponding to timeoffsetDRX, timeoffset-eDRX-Short, and timeoffset-eDRX-Long.

*WUS UE grouping objective in Release 16 (Rel-16)*

In the Rel-16 Work Item Description (WID), it was agreed that WUS should be further developed to also include UE grouping, such that the number of UEs that are triggered by a WUS is further narrowed down to a smaller subset of the UEs that are associated with a specific paging occasion (PO):
*The objective is to specify the following set of improvements for machine-type communications for BL/CE UEs.*
*Improved DL transmission efficiency and/or UE power consumption:*

- ...
- *Specify support for UE-group wake-up signal (WUS) [RAN1, RAN2, RAN4]*

The purpose is to reduce the false paging rate, i.e., to avoid that a given UE is unnecessarily woken up by a WUS transmission intended for another UE. This feature is referred to as Rel-16 group WUS, or GWUS. However, this is not directly related to WUR and will not further be explained here.

*Release 17 (Rel-17) NR PEI*

In Rel-17 discussions started on introducing a WUS for NR, then called Paging Early Indication (PEI). However, since at the time no coverage enhancement was specified for NR, the only gain for Rel-17 PEI was for scenarios where the small fraction of UEs are in bad coverage and with large synchronization error due to the use of longer DRX cycles. The gain for such UEs were that with the use of PEI they would typically only have to acquire one SSB before decoding PEI, instead of up to 3 SSBs if PEI is not used, value according to UE vendors. So, for must UEs, Rel-17 PEI will not result in gains or increased performance.
Rel-17 PEI will also support UE grouping for false paging reduction, similar to the Rel-16 GWUS above, which will have some gains at higher paging load.
In RAN#93e it was agreed that PEI will be PDCCH-based, as seen in from the next subsection, making it much less interesting for WUR, i.e., the main baseband receiver is required for decoding PEI.

*Release 18 (Rel-18) NR WUR*

In Rel-18, there has been rather large interest to introduce WUR for NR. As explained above, the only specification support needed to be able to use a WUR in the UE, is the specification of a WUS and a long enough time gap between the WUS and the PDCCH in the PO, to allow the UE to start up the main receiver. Therefore, the main difference to Rel-17 PEI is the WUS in Rel-18 should not be PDCCH-based and allow for a simpler and low power receiver, i.e., WUR with simple modulation and detection techniques, e.g. using on-off keying (OOK) modulation and non-coherent detection.
In Rel-18, a study item on "low-power wake-up signal and receiver for NR" was approved. The relevant justification and objective sections are copied below:

| • Justification<br>5G systems are designed and developed targeting for both mobile telephony and vertical use cases. Besides latency, reliability, and availability, UE energy efficiency is also critical to 5G. Currently, 5G devices may have to be recharged per week or day, depending on individual's usage time. In general, 5G devices consume tens of milli-watts in RRC idle/inactive state and hundreds of milliwatts in RRC connected state. Designs to prolong battery life is a necessity for improving energy efficiency as well as for better user experience. |
|---|

(continued)

Energy efficiency is even more critical for UEs without a continuous energy source, e.g., UEs using small rechargeable and single coin cell batteries. Among vertical use cases, sensors and actuators are deployed extensively for monitoring, measuring, charging, etc. Generally, their batteries are not rechargeable and expected to last at least few years as described in TR 38.875. Wearables include smart watches, rings, eHealth related devices, and medical monitoring devices. With typical battery capacity, it is challenging to sustain up to 1-2 weeks as required.

The power consumption depends on the configured length of wake-up periods, e.g., paging cycle. To meet the battery life requirements above, eDRX cycle with large value is expected to be used, resulting in high latency, which is not suitable for such services with requirements of both long battery life and low latency. For example, in fire detection and extinguishment use case, fire shutters shall be closed and fire sprinklers shall be turned on by the actuators within 1 to 2 seconds from the time the fire is detected by sensors, long eDRX cycle cannot meet the delay requirements. eDRX is apparently not suitable for latency-critical use cases. Thus, the intention is to study ultra-low power mechanism that can support low latency in Rel-18, e.g. lower than eDRX latency.

Currently, UEs need to periodically wake up once per DRX cycle, which dominates the power consumption in periods with no signalling or data traffic. If UEs are able to wake up only when they are triggered, e.g., paging, power consumption could be dramatically reduced. This can be achieved by using a wake-up signal to trigger the main radio and a separate receiver which has the ability to monitor wake-up signal with ultra-low power consumption. Main radio works for data transmission and reception, which can be turned off or set to deep sleep unless it is turned on.

The power consumption for monitoring wake-up signal depends on the wake-up signal design and the hardware module of the wake-up receiver used for signal detecting and processing.

The study should primarily target low-power WUS/WUR for power-sensitive, small form-factor devices including IoT use cases (such as industrial sensors, controllers) and wearables. Other use cases are not precluded, e.g.XR/smart glasses, smart phones.

• Objective of SI

As opposed to the work on UE power savings in previous releases, this study will not require existing signals to be used as WUS. All WUS solutions identified shall be able to operate in a cell supporting legacy UEs. Solutions should target substantial gains compared to the existing Rel-15/16/17 UE power saving mechanisms. Other aspects such as detection performance, coverage, UE complexity, should be covered by the evaluation.

**The study item includes the following objectives:**

• Identify evaluation methodology (including the use cases) & KPIs [RAN1]

◦ Primarily target low-power WUS/WUR for power-sensitive, small form-factor devices including IoT use cases (such as industrial sensors, controllers) and wearables

▪ Other use cases are not precluded

• Study and evaluate low-power wake-up receiver architectures [RAN1, RAN4]

• Study and evaluate wake-up signal designs to support wake-up receivers [RAN1, RAN4]

• Study and evaluate L1 procedures and higher layer protocol changes needed to support the wake-up signals [RAN2, RAN1]

(continued)

| • Study potential UE power saving gains compared to the existing Rel-15/16/17 UE power saving mechanisms and their coverage availability, as well as latency impact. System impact, such as network power consumption, coexistence with non-low-power-WUR UEs, network coverage/capacity/resource overhead should be included in the study [RAN1]<br>◦ Note: The need for RAN2 evaluation will be triggered by RAN1 when necessary. |
|---|

The benefit of WUR is to reduce the energy consumption of the receiver, such that unless there is any paging and data for the UE it may remain in a power saving state. This will extend the battery life of the device, or alternatively enable shorter downlink latency, e.g., shorter DRX, at a fixed battery life. For short-range communication, the WUR power can be low enough, e.g., ~3 uW, that this may even, in combination with energy harvesting, enable that the WUR is continuously on, i.e., DRX and/or duty-cycling is not used, without the need for a battery. This may be considered as a key enabler of batteryless devices towards 6G.

IEEE WUR

In Institute of Electrical and Electronics Engineers (IEEE), the support for WUR has been specified to a greater extent than in 3GPP. That is, the focus was on low power WUR from start and the design uses WUR not only for receiving the WUS but also other control signals and signaling, such as synchronization and mobility information. This allows the stations, corresponding to UEs in 3GPP, to only use the WUR when there is no user-plane data transmission ongoing.

Similar to the 3GPP solution, the use of WUR is only enabled in stations and not in access points (APs), that is for downlink communication only. The AP advertises that it has WUR operation capability, along with WUR configuration parameters, among other info, in which band/channel WUR is operational, which may be different from the band/channel used for data transmission using the main receiver, e.g. WUR in 2.4 GHz band but data communication in 5 GHz band. Also note that the WUR operating channel is advertised in the beacon, and that the WUR discovery operating channel may be different from the WUR operating channel. Stations may then request to be configured with WUR mode of operation. This request has to be granted by the AP, and in case it is granted, the station is further configured and/or setup for WUR mode of operation. The configuration is only valid for the connection to the associated AP, and further the configuration must be torn down and/or de-configured if WUR is not be used anymore. Both continuous WUR, receiver open all the time, and duty-cycled WUR, receiver only open during preconfigured time slots, mode of operations are supported. For the latter the length of the duty-cycles and on-time during wake up is part of the WUR configuration.

Unlike the 3GPP solution, the WUR operation mode is a "sub-state" of the regular operation and upon the detection of a WUS transmission from the AP, the station will resume the power saving mechanism it was configured with before entering the WUR operation mode. That is, IEEE has specified a number of different power saving mechanisms, and for example if duty-cycled monitoring of the downlink has been configured for the station it will switch to that upon detection of the WUS, unlike the specified 3GPP mechanism which only covers paging, and the UE will continue to monitor PDCCH if WUS is detected. In this way the IEEE WUR functionality is more general, and stills allows for the station to upon detection of WUS "monitor paging" by checking in the beacon from the AP for which stations there is data, or for the station to directly respond with an uplink transmission.

A station receiving the IEEE WUS must synchronize to the wireless medium prior to performing any transmissions, i.e., using sync info in the beacon from the AP, typically transmitted every 100ms, or from the transmission to another station. Synchronization to the wireless medium refers to the following in IEEE 802.11: a station changing from sleep to awake in order to transmit must perform channel clear assessment until it receives one or more frames that allow it to correctly set the virtual carrier sensing. This is to prevent collisions with transmissions from hidden nodes. Essentially the virtual carrier sensing tells a station to defer for a time period even if the wireless medium appears to be idle, and can be set by receiving frames that indicate the duration of an ongoing frame exchange. Note that in WiFi typically one beacon transmission is enough to sync for the station, i.e., here is no need to acquire several transmissions due to poor coverage. Unlike operation in licensed bands, the station also has to apply carrier sensing, and also possibly re-acquire channel sensing parameters, before uplink transmissions.

The physical WUS in IEEE comprises complete frames which much to be processed by the station. The drawback with this design is that it requires more processing and handling and processing in the station, e.g., compared to a simple WUR design which triggers one pre-defined activity in case WUS is detected. The benefit is that it comprises more information, and the solution is more general. The IEEE WUS comprises information to indicate if the WUS is a WUR sync beacon, see below, a WUR discovery beacon, see below, or a regular WUS intended to wake the station up. The WUS may also comprise proprietary frames, which may e.g., be used to directly turn actuators on/off. The transmission uses OOK

modulation, using Manchester coding, but is using multi-carrier OOK which may be generated by an OFDM transmitter, i.e., WUR may be enabled as a software upgrade in APs. The WUS is 4 MHz wide, but a whole 20 MHz channel is reserved. The WUS starts with a 20 MHz legacy preamble, to allows other stations to perform carrier sense, followed by 4 MHz Manchester coded OOK. Two data rates are supported: 62.5 kbps and 250 kbps, and link adaptation is up to the AP, each packet is self-contained and includes the data rate, i.e., in the WUR there are two possible sync words used to signal the data rate.

The WUS may comprise the following information:

- Station ID, or group ID, grouping of stations is supported.
- Payload up to 22 bytes.
- Short frames comprise only basic info: WUR frame type and addressing.
- Ordinary frames comprise control info, and in addition proprietary info.
- WUR beacons comprise Basic Service Set ID (BSS-ID), sync information, time counter.
- Similar structure for WUS and WUR beacons, such as sync words indicate the data rate, the station may then detect the header, from this the station may tell if it is WUS or beacon, then check body.
- WUR discovery frames comprise mobility related information to allow for lower power scan, see below.

Regarding mobility, both WUR sync beacons and WUR discovery beacons have been specified, which only requires the WUR to be used for reception, such that stations can stay in the WUR operation mode unless there is data transmission for the station. I.e., stations only need to switch back to legacy PSM upon WUS detection, or when moving to a new AP. WUR sync beacons are used by stations to obtain rough synchronization, for data transmission the legacy beacon must still be acquired, and WUR discovery beacons are used to carry, e.g., legacy mobility information to enable quick/low energy scanning, such as allowing stations, only using the WUR, to get information related to local and roaming scans for nearby APs, e.g. Service Set ID (SSID) and main radio operating channels, if the channel quality should deteriorate.

That is, in the WUR discovery beacon the AP may indicate one or more BSS in which WUR is supported such that stations do not have to scan all frequencies/channels. The BSS-ID has a one-to-one mapping with the assigned SSID name. Since the WUR discovery beacon comprises the legacy mobility information, this means there is some duplication and/or redundancy in the broadcasted information. This allows for low power scanning, using only the WUR. Note however that mobility in IEEE is restricted to the same AP, and that hand-over between APs etc. is not supported in the same way as in 3GPP. If a station in WUR operation mode moves to a new AP, it would have to move out of WUR operation mode and use the main receiver to obtain the beacon, sync, configuration, and associate to the new AP. Furthermore, CN 110 536 382 B discloses broadcasting WUS to UE groups where the specific WUS location is determined by calculating time offsets and durations based on a Group ID, rather than by reading message headers.

## SUMMARY

An object of embodiments herein is e.g., to improve the performance of the wireless communications network by an enhanced WUS mechanism.

According to an aspect of embodiments herein, the object is achieved by a method performed by a network node for broadcasting a wake-up signal, WUS, message for waking up User Equipments, UEs, in a group of UEs. The group of UEs is served by the network node in a wireless communications network.

The network node prepares a set of WUS records. Each WUS record comprises an identity related to a UE in the group of UEs.

The network node broadcasts a first WUS message to the group of UEs. The first WUS message comprises at least one first prepared WUS record out of the set of WUS records. A header of the first WUS message comprises an indication indicating that a subsequent WUS message is to be decoded by the group of UEs.

The network node broadcasts one by one, a number of subsequent WUS messages to the group of UEs. Each respective subsequent WUS message comprises at least one respective prepared subsequent WUS record out of the set of WUS records and a respective header comprising an indication indicating whether or not a further subsequent WUS message is to be decoded by the group of UEs. The indication in the last subsequent WUS message indicates that no further subsequent WUS messages is to be decoded.

The first WUS message and the number of subsequent WUS messages are broadcasted in the same WUS occasion.

According to an aspect of embodiments herein, the object is achieved by a method performed by a User Equipment, UE, for receiving a wake-up signal, WUS, message for waking up UEs in a group of UEs. The group of UEs is served by the network node in a wireless communications network. The UE operates in a low power state.

The UE receives a first WUS message broadcasted by a network node. The first WUS message comprises at least one first prepared WUS record out of a set of WUS records. Each WUS record comprises an identity related to a UE in

the group of UEs. A header of the first WUS message comprises an indication indicating that a subsequent WUS message is to be decoded by the group of UEs.

The UE decodes the first WUS message. The decoding comprises determining whether the identifier in the first WUS record is related to the UE.

When determining that the identity is related to the UE, the UE wakes up and performs a first action associated to receiving a WUS message. Waking up further comprises refraining from decoding any subsequent WUS message.

When determining that the identity is not related to the UE, the UE decodes one by one, a number of subsequent WUS messages broadcasted by the network node. Each respective subsequent WUS message comprises at least one respective prepared subsequent WUS record out of the set of WUS records and a respective header comprising an indication indicating whether or not a further subsequent WUS message is to be decoded by the group of UEs. The indication in the last subsequent WUS message indicates that no further subsequent WUS messages is to be decoded. The decoding comprises determining one by one, whether the identifier in the respective WUS records is related to the UE, and based on whether the identifier is related to the UE performing a second action.

The first WUS message and the number of subsequent WUS messages are adapted to be broadcasted in the same WUS occasion.

According to another aspect of embodiments herein, the object is achieved by a network node configured to broadcast a wake-up signal, WUS, message for waking up User Equipments, UEs, in a group of UEs. The group of UEs is served by the network node in a wireless communications network. The network node is further configured to:

Prepare a set of WUS records, each WUS record adapted to comprise an identity related to a UE in the group of UEs,
broadcast a first WUS message to the group of UEs, which first WUS message is adapted to comprise at least one first prepared WUS record out of the set of WUS records, wherein a header of the first WUS message is adapted to comprise an indication adapted to indicate that a subsequent WUS message is to be decoded by the group of UEs,
broadcast one by one, a number of subsequent WUS messages to the group of UEs, wherein each respective subsequent WUS message is adapted to comprise at least one respective prepared subsequent WUS record out of the set of WUS records and a respective header adapted to comprise an indication adapted to indicate whether or not a further subsequent WUS message is to be decoded by the group of UEs, wherein the indication in the last subsequent WUS message is adapted to indicate that no further subsequent WUS messages is to be decoded,
wherein the first WUS message and the number of subsequent WUS messages are adapted to be broadcasted in the same WUS occasion.

According to another aspect of embodiments herein, the object is achieved by a User Equipment, UE, configured to receive a wake-up signal, WUS, message for waking up UEs in a group of UEs. The group of UEs is adapted to be served by the network node in a wireless communications network. The UE is adapted to operate in a low power state. The UE is further configured to:

Receive a first WUS message broadcasted by a network node, which first WUS message is adapted to comprise at least one first prepared WUS record out of a set of WUS records, each WUS record comprising an identity related to a UE in the group of UEs, wherein a header of the first WUS message is adapted to comprise an indication indicating that a subsequent WUS message is to be decoded by the group of UEs,
decode the first WUS message, wherein to decode is adapted to comprise to determine whether the identifier in the first WUS record is related to the UE,
when determined that the identity is related to the UE, wake up and perform a first action associated to receiving a WUS message, wherein to wake up is further adapted to comprise to refrain from decoding any subsequent WUS message.
when determined that the identity is not related to the UE, decode one by one, a number of subsequent WUS messages broadcasted by the network node, wherein each respective subsequent WUS message is adapted to comprise at least one respective prepared subsequent WUS record out of the set of WUS records and a respective header adapted to comprise an indication adapted to indicate whether or not a further subsequent WUS message is to be decoded by the group of UEs, wherein the indication in the last subsequent WUS message is adapted to indicate that no further subsequent WUS messages is to be decoded, wherein to decode is adapted to comprise to determine one by one, whether the identifier in the respective WUS records is related to the UE, and based on whether the identifier is related to the UE perform a second action,
wherein the first WUS message and the number of subsequent WUS messages are adapted to be broadcasted in the same WUS occasion.

Embodiments herein target to handle waking up UEs in a group of UEs, e.g., a single UE and/or subgroup of UEs in the group of UEs. The network node prepares a set of WUS records and broadcasts a first WUS message comprising at

least one of the prepared WUS records. Each WUS record comprises an identity of related to a UE, e.g., a single UE or a subgroup of UEs, in the group of UEs. The network node further broadcasts a number of subsequent WUS messages comprising a respective prepared WUS record and a respective header indicating whether a further subsequent WUS message is to be decoded. Embodiments herein may in this way bring the advantage of an efficient mechanism of enhancing the wake up signaling, thereby improving the performance of the wireless communications network. This is achieved by limiting the WUS decoding time for UEs to maximize the WUR gain, but at the same time allow for a high-capacity solution.

BRIEF DESCRIPTION OF THE DRAWINGS

Examples of embodiments herein are described in more detail with reference to attached drawings in which:

| | |
|---|---|
| Figure 1 | is a schematic block diagram according to prior art. |
| Figure 2 | is a schematic block diagram according to prior art. |
| Figure 3 | is a schematic block diagram according to prior art. |
| Figure 4 | is a schematic block diagram illustrating embodiments of a wireless communications network. |
| Figure 5 | is a flowchart depicting embodiments of a method in a network node. |
| Figure 6 | is a flowchart depicting embodiments of a method in a user equipment. |
| Figure 7 | is a schematic block diagram depicting examples of embodiments herein. |
| Figure 8 | is a schematic block diagram depicting examples of embodiments herein. |
| Figure 9 | is a schematic block diagram depicting examples of embodiments herein. |
| Figure 10 | is a signaling diagram depicting examples of embodiments herein. |
| Figure 11 | is a schematic block diagram illustrating embodiments of a network node. |
| Figure 12 | is a schematic block diagram illustrating embodiments of a user equipment. |
| Figure 13 | schematically illustrates a telecommunication network connected via an intermediate network to a host computer. |
| Figure 14 | is a generalized block diagram of a host computer communicating via a base station with a user equipment over a partially wireless connection. |
| Figures 15 to 18 | are flowcharts illustrating methods implemented in a communication system including a host computer, a base station and a user equipment. |

DETAILED DESCRIPTION

As a part of developing embodiments herein the inventors identified a problem which first will be discussed.

There are two possible solutions for Rel-18 NR WUR:

1) WUS includes a UE identifier, such as e.g., a UE_ID.

a. Pros: A UE being paged with WUS may omit the legacy paging procedure and trigger random access immediately. False paging is reduced to zero hence WUR may provide maximum power saving.
b. Cons: WUS needs to carry a payload, e.g., the 5G-S-TMSI UE identifier in NR is 48 bits, which may mean worse link performance or considerably longer reception time.
c. Similar to IEEE solution.

2) WUS indicates a UE sub-group

a. Pros: WUS detection time may be very short, which may maximize the WUR gain since the UE is most often not paged in the WUS monitoring occasion.
b. Cons: The full UE_ID cannot be included, so all UEs sharing a WUS sub-group will be triggered to start to main receiver and monitor PDCCH as in the legacy paging procedure. The UE will do this also when another UE in the same WUS UE sub-group is being addressed, since it will find out at first in PDSCH that its own paging record in not there. This may lead to unnecessary energy consumption and is referred to as 'false paging'.
c. For example, sequence based WUS as used in NB-IoT and LTE-M. With a 1-to-1 mapping of WUS occasion to POs, 1 WUS sequence per cell means all UEs sharing a PO are woken up by the WUS, and using 4 different WUS sequences in the cell means the UEs sharing a PO are divided in to 4 different WUS UE subgroups, hence reducing false paging.

Capacity is not an issue for solution 2, for NB-IoT and LTE-M in Rel-16 a WUS group corresponding to "wake up all

UEs" was even supported. However, for solution 1 paging capacity may become a problem since including more than one long UE_ID is problematic.

An object of embodiments herein is e.g., to improve the performance of the wireless communications network by an enhanced WUS mechanism.

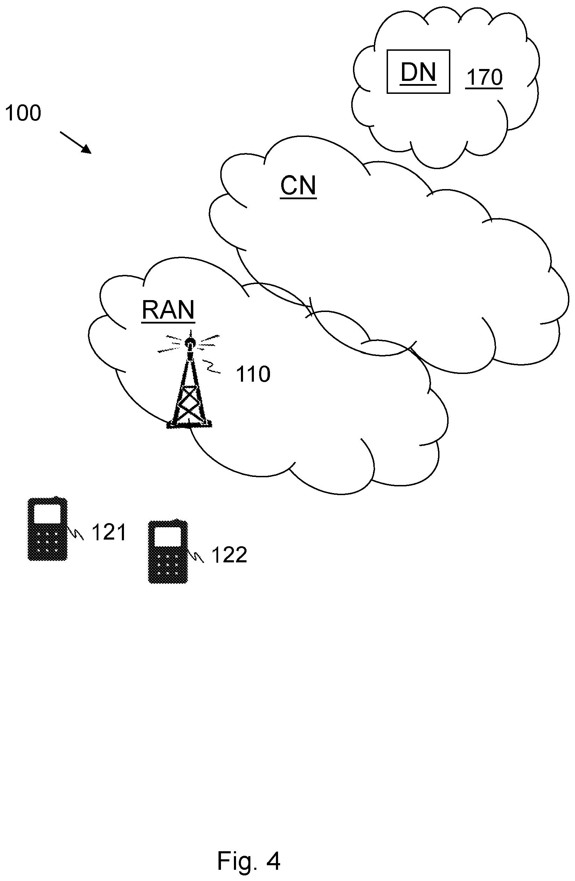

**Figure** 4 is a schematic overview depicting a **wireless communications network 100** wherein embodiments herein may be implemented. The wireless communications network 100 comprises one or more **RANs** and one or more CNs. The wireless communications network 100 may use 5G NR but may further use a number of other different technologies, such as, Wi-Fi, (LTE), LTE-Advanced, Wideband Code Division Multiple Access (WCDMA), Global System for Mobile communications/enhanced Data rate for GSM Evolution (GSM/EDGE), or Ultra Mobile Broadband (UMB), just to mention a few possible implementations.

Network nodes such as a **network node 110** operates in the wireless communications network 100, by means of antenna beams, referred to as beams herein. The network node 110 e.g., provides a number of cells (not shown), and may use these cells for communicating with e.g., at least one UE 121. The network node 110 may respectively be a transmission and reception point e.g. a radio access network node such as a base station, e.g. a radio base station such as a NodeB, an evolved Node B (eNB, eNodeB, eNode B), an NR Node B (gNB), a base transceiver station, a radio remote unit, an Access Point Base Station, a base station router, a transmission arrangement of a radio base station, a stand-alone access point, a Wireless Local Area Network (WLAN) access point, an Access Point Station (AP STA), an access controller, a UE acting as an access point or a peer in a Device to Device (D2D) communication, or any other network unit capable of communicating with a UE within any of cell1 and cell2 served by the base station 105 depending e.g. on the radio access technology and terminology used.

User Equipments operate in the wireless communications network 100, such as at UE 121, 122. The UEs 121, 122 may provide radio coverage by means of a number of antenna beams, also referred to as beams herein.

The UEs 121, 122 may e.g. be an NR device, a mobile station, a wireless terminal, an NB-loT device, an eMTC device, an NR RedCap device, a CAT-M device, a Wi-Fi device, an LTE device and a non-access point (non-AP) STA, a STA, that communicates via a base station such as e.g. the network node 110, one or more Access Networks (AN), e.g. RAN, to one or more core networks (CN). It should be understood by the skilled in the art that the UE relates to a non-limiting term which means any UE, terminal, wireless communication terminal, user equipment, (D2D) terminal, or node e.g. smart phone, laptop, mobile phone, sensor, relay, mobile tablets or even a small base station communicating within a cell.

Methods herein may in one aspect be performed by the UE 121 and in another aspect by the network node 110. As an alternative, a Distributed Node (DN) and functionality, e.g. comprised in a **cloud 170** as shown in Figure 1, may be used for performing or partly performing the methods.

Embodiments herein may provide methods for linking several WUS records, comprising one UE_ID each, to support the rare cases when more than one UE is being paged. Embodiments herein may further provide methods to define the start time for WUS monitoring. Yet further, embodiments herein may provide, e.g., as a generalization, a WUS message structure wherein a message header may indicate WUS records, a WUR synchronization signal part, system information update, common paging indication, public warning, etc.

Examples of embodiments herein, may provide the advantage of limiting the WUS decoding time for UEs to maximize the WUR gain, but at the same time allow for a high-capacity solution. Further, examples of embodiments herein, may provide the advantage of enabling further use of WUS as synchronization and common paging in the cell. The latter may be relevant for public warning system and system information update, e.g., de-configuring the support of WUR in a cell may be very impractical without the system information update notification, in which all WUR UEs in the entire network would have to be individually paged in the cell.

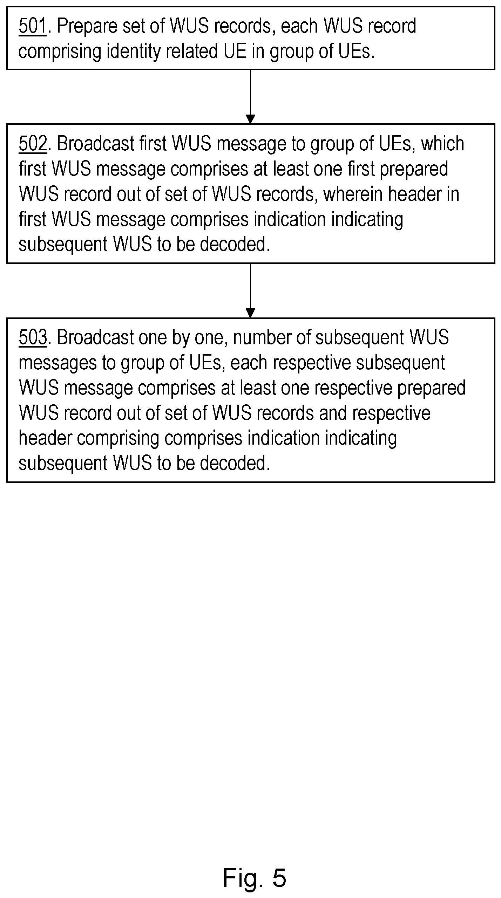

A method according to embodiments will now be described from the view of the network node 110 together with **Figure 5**. Figure 5 depicts example embodiments of a method performed by the network node 110 e.g., for broadcasting a WUS, message for waking up UEs in a group of UEs 121, 122. The group of UEs 121, 122 is served by the network node 110 in the wireless communications network 100. The UEs may comprise a single UE in the group of UEs 121, 122, or the UEs may comprise a subgroup of UEs in the group of UEs 121, 122.

The method comprises one or more of the following actions, which actions may be taken in any suitable order. Actions that may be optional are presented in dashed boxes in Figure 5.

**Action 501**

The network node 110 prepares a set of WUS records. Each WUS record comprises an identity related to a UE in the group of UEs 121, 122.

The number of prepared WUS records may depend on e.g., the number UEs to be woken up, and/or whether the WUS records comprises an identity of a specific UE, such as e.g., the UE 121, or an identity of a subgroup of UEs in group of UEs. The identity related to a UE in the group of UEs 121, 122 may comprise any one out of an identity of a specific UE 121 in the group of UEs 121, or an identity associated to a subgroup of UEs in the group of UEs 121. In other words, a WUS

record may comprise an identity of a UE, or an identity identifying a subgroup of UEs.

**Action 502**

The network node 110 broadcasts a first WUS message to the group of UEs 121, 122. The first WUS message comprises at least one first prepared WUS record out of the set of WUS records. A header of the first WUS message comprises an indication indicating that a subsequent WUS message is to be decoded by the group of UEs 121, 122. Thus, the network node 110 broadcast the first WUS message to all UEs, such as the group of UEs 121, 122, served by the network node 110. This may mean that all UEs in the group of UEs 121, 122 receives the broadcasted first WUS message. As explained further below, prompting the UEs to perform certain actions depending on whether the identify comprised in the header of the at least one first prepared WUS record is related to the UE.

In some embodiments, a WUS message, e.g., any one or more of the first WUS message and one or more of the number of subsequent WUS messages, comprises a plurality of prepared WUS records. This may mean that more than one WUS record is comprised in a single WUS message. This allows the network node 110 to wake up several UEs, e.g., a single UE or a subgroup of UEs with each WUS record, with one WUS message.

In some embodiments, the header of a WUS message, e.g., any one or more of the first WUS message and one or more of the number of subsequent WUS messages, comprising a plurality of prepared WUS records, comprises an indication indicating the number of prepared WUS records comprised in the WUS message. This way, a UE, such as a UE in the group of UEs, 121, 122, receiving the broadcasted WUS message is aware of how many WUS records the WUS message comprises.

In some embodiments, the header of a WUS message, e.g., any one or more of the first WUS message and one or more of the number of subsequent WUS messages, comprises an indication indicating whether or not the corresponding WUS message comprises a wake-up radio, WUR, synchronization signal, SS. The WUR-SS may be used by a UE e.g., when performing a first action as described below.

**Action 503**

The network node 110 broadcasts one by one, a number of subsequent WUS messages to the group of UEs 121, 122. Each respective subsequent WUS message comprises at least one respective prepared subsequent WUS record out of the set of WUS records and a respective header comprising an indication indicating whether or not a further subsequent WUS message is to be decoded by the group of UEs 121, 122. The indication in the last subsequent WUS message indicates that no further subsequent WUS messages is to be decoded. The first WUS message and the number of subsequent WUS messages are broadcasted in the same WUS occasion. By indicating which subsequent WUS message is the last, the UEs in the group of UEs 121, 122 knows that no more WUS messages have to be decoded during this WUS occasion. This may reduce the battery usage of the UEs 121, 122, which in turn increases the battery-life of the UEs 121, 122.

In some embodiments, the number of subsequent WUS messages comprises one or more subsequent WUS messages.

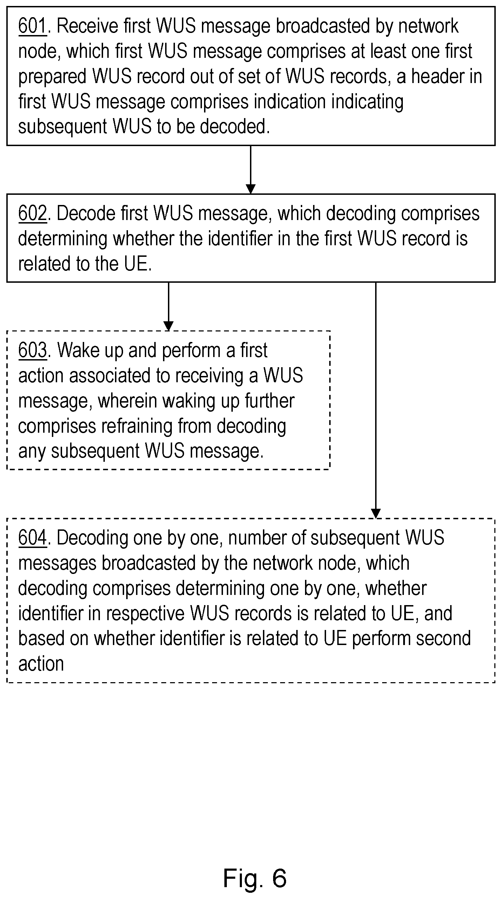

A method according to embodiments will now be described from the view of the network node 110 together with **Figure 6**. Figure 6 depicts example embodiments of a method performed by the UE 121 e.g., for receiving a WUS message for waking up UEs in the group of UEs 121, 122. The group of UEs 121, 122 is served by the network node 110 in the wireless communications network 100. The UE 121 may be configured to monitor for WUS messages broadcasted by the network node 110 during WUS occasions. The UEs may comprise a single UE, such as the UE 121, in the group of UEs 121, 122, or the UEs may comprise a subgroup of UEs in the group of UEs 121, 122. The subgroup may comprise the UE 121.

The method comprises one or more of the following actions, which actions may be taken in any suitable order. Actions that may be optional are presented in dashed boxes in Figure 6.

**Action 601**

The UE 121 receives the first WUS message broadcasted by the network node 110. The first WUS message comprises at least one first prepared WUS record out of the set of WUS records. Each WUS record comprises an identity related to a UE in the group of UEs 121, 122. A header of the first WUS message comprises an indication indicating that a subsequent WUS message is to be decoded by the group of UEs 121, 122.

The number prepared of WUS records may depend on e.g., the number UEs to be woken up, and/or whether the WUS records comprises an identity of a specific UE, such as e.g., the UE 121, or an identity of a subgroup of UEs in group of UEs. The identity related to a UE in the group of UEs 121, 122 may comprise any one out of an identity of a specific UE in the group of UEs 121, 122, or an identity associated to a subgroup of UEs in the group of UEs 121. In other words, a WUS

record may comprise an identity of a UE, e.g., the UE 121, or an identity identifying a subgroup of UEs. As mentioned above, the subgroup of UEs may comprise the UE 121.

In some embodiments, a WUS message, e.g., any one or more of the first WUS message and one or more of the number of subsequent WUS messages, comprises a plurality of prepared WUS records. This may mean that more than one WUS record is comprised in a single WUS message. This allows the network node 110 to wake up several UEs, e.g., a single UE or a subgroup of UEs with each WUS record, with one WUS message.

In some embodiments, the header of a WUS message, e.g., any one or more of the first WUS message and one or more of the number of subsequent WUS messages, comprising a plurality of prepared WUS records, comprises an indication indicating the number of prepared WUS records comprised in the WUS message. This way, the UE 121 is aware of how many WUS records the WUS message comprises.

In some embodiments, the header of a WUS message, e.g., any one or more of the first WUS message and one or more of the number of subsequent WUS messages, comprises an indication indicating whether or not the corresponding WUS message comprises a wake-up radio, WUR, synchronization signal, SS. The WUR-SS may be used by a UE e.g., when performing a first action as described below.

**Action 602**

The UE 121 decodes the first WUS message. The decoding comprises determining whether the identity in the first WUS record is related to the UE 121. This may e.g., comprise determining that the identity comprised in the WUS record is the identity of the UE 121, determining that the identity comprised in the WUS record is an identity of a subgroup of UEs to which the UE 121 belongs, or that neither of the above are true. The latter may mean that the, when the indication indicates that a subsequent WUS message is to be decoded, the UE 121 will decode said subsequent WUS message.

**Action 603**

When determining that the identity is related to the UE 121, the UE 121 wakes up and performs a first action associated to receiving a WUS message. To wake up further comprises refraining from decoding any subsequent WUS message. The first action may e.g., comprise triggering, such as starting or initiating, a random access procedure when the identity in the WUS record is the identity of the UE 121. Alternatively, or additionally, the first action may e.g., comprise triggering, such as starting or initiating, a legacy paging monitoring in it paging occasion when the identity in the WUS record is an identity of subgroup of UEs to which the UE 121 belongs. Refraining from decoding any subsequent WUS message may e.g., mean that the UE 121 ignores, e.g., stops monitoring for, any further WUS messages broadcasted by the network node 110 during the WUS occasion. This regardless of if the indication in header of the decoded WUS message indicates that a subsequent WUS message is to be decoded. When performing the first action, the UE 121 may use the WUR-SS, if comprised in the WUS message, to synchronize with the wireless communications network 100, such as the network node 110.

**Action 604**

When determining that the identity is not related to the UE 121, the UE 121 decodes one by one, a number of subsequent WUS messages broadcasted by the network node 110. Each respective subsequent WUS message comprises at least one respective prepared subsequent WUS record out of the set of WUS records. Each respective subsequent WUS message further comprises a respective header comprising an indication indicating whether or not a further subsequent WUS message is to be decoded by the group of UEs 121, 122. The indication in the last subsequent WUS message indicates that no further subsequent WUS messages is to be decoded. The decoding comprises the UE 121 determining one by one, whether the identifier in the respective WUS records is related to the UE 121. Based on whether the identifier is related to the UE 121, the UE 121 performs a second action. The first WUS message and the number of subsequent WUS messages are broadcasted in the same WUS occasion. As mentioned above, this may e.g., comprise determining that the identity comprised in the WUS record is the identity of the UE 121, determining that the identity comprised in the WUS record is an identity of a subgroup of UEs to which the UE 121 belongs, or that neither of the above are true. The latter may mean that the, when the indication indicates that a subsequent WUS message is to be decoded, the UE 121 will decode said subsequent WUS message. By indicating which subsequent WUS message is the last, the UE 121 knows that no more WUS messages has to be decoded during this WUS occasion. This may reduce the battery usage of the UEs, which in turn increases the battery-life of the UEs.

In some embodiments, performing the second action comprises any one out of waking up and performing the first action associated to receiving a WUS message and refraining from decoding any subsequent WUS message, decoding a further subsequent WUS message, or remaining in the low power state. Which of the last of alternatives the second action comprises, may e.g., depend on whether the header of the decode subsequent WUS message indicates that a further

subsequent WUS message is to be decoded or not.

In some embodiments, when determining that the identifier comprised in the last subsequent WUS record is not related to the UE 121, the UE 121 remains in the low power state. This may mean the UE 121 should not wake up during this WUS occasion, and thus remains in the low power state.

In some embodiments, the number of subsequent WUS messages comprises one or more subsequent WUS messages.

The method will now be further explained and exemplified in below embodiments. These below embodiments may be combined with any suitable embodiment as described above.

*Indication for linked WUS records*

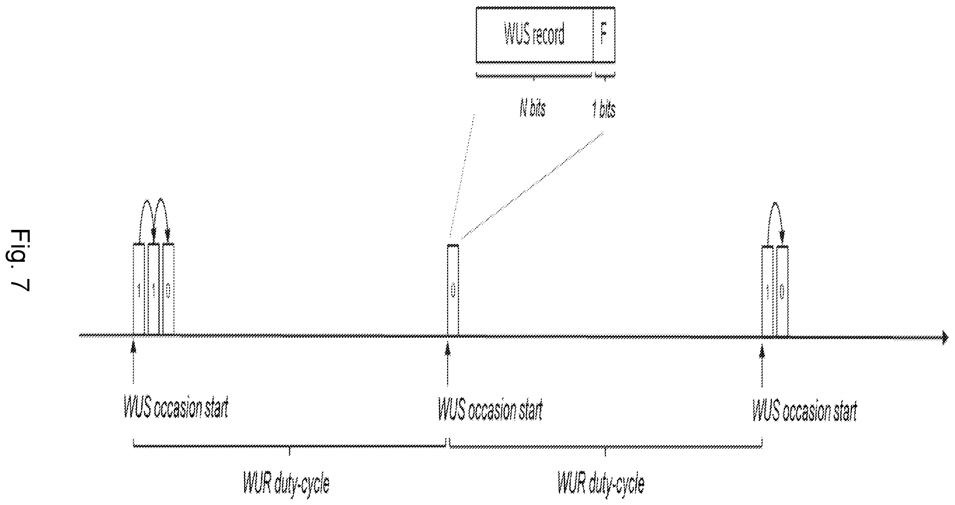

As shown in **Figure 7,** the intention is to partition the WUS into different parts, such as the first WUS message and the one or more subsequent WUS messages, e.g., corresponding to addressing of one UE each in a WUS record, which in case more than one UE is to be paged or addressed may be linked or chained to include more WUS records. E.g., the first WUS message and one or more subsequent WUS messages are linked or chained by the indication indicating whether any subsequent WUS messages is to be decoded.

Therefore, an indication may be needed to inform UEs, such as the group of UEs 121, 122, of the end of the overall WUS transmission.

In one example embodiment, this is achieved by including an explicit indication, such as a bit or flag, in the WUS payload, such as e.g., in a header of the WUS message, indicated as 1 F bit in Figure 7. For example, the WUS record may comprise the 48-bit 5G-S-TMSI for the paged UE and the 1 bit for the F indication. If the F indication is set to '1' it means that the group of UEs 121 should continue to receive also a subsequent WUS record, e.g., comprised in a subsequent WUS message, and so on. If the F indication is set to '0' it means that the received WUS record is the last one in this WUS monitoring occasion and that the group of UEs 121, 122 may stop monitoring and go back to a sleep state such as duty-cycle.

In another example embodiment, detecting the subsequent WUS record may be up to blind decoding in the UE, such as the group of UEs 121, 122. I.e., any explicit indication, e.g., an F bit or similar, is omitted and the group of UEs 121, 122 may always attempt to decode a subsequent WUS record, e.g., comprised in a subsequent WUS message. The benefit compared to the previous solution may be that the 1 bit of information may be saved, but the drawback may be that the group of UEs 121, 122 may always need to decode at least two subsequent WUS records, also when paging load is very low.

In case a UE, such as the UE 121 in the group of UEs 121, 122, finds its own UE_ID, or WUS UE sub-group in the general case, in the WUS record, the UE 121 may stop the monitoring of the WUS and initiate the procedure associated with receiving the WUS, e.g., trigger random access in case the UE_ID is included in WUS, or trigger legacy paging monitoring in the PO if the WUS indicates the UE's WUS sub-group.

In an example of a generalization of embodiments herein, the F bit may be part of a WUS header which may indicate which information will be comprised in a WUS message. Other bits in the WUS header may indicate to the group of UEs 121 which parts are included in the WUS message. For example:

| Indication: | Meaning: |
|---|---|
| F bit | Indicating that the UE shall monitor and decode also a subsequent WUS message or WUS record. |
| S bit | Indicating that the WUS message includes a synchronization signal part. |
| SI bit | Indicating a system information update to UEs, and that WUR UEs should re-acquire system information (using the main receiver). Could correspond to bit 1 in the Short Message in TS 38.331. |
| W bit | Indication that a WUS record is included in the WUS message. (This can be generalized to using more bits, e.g. a 2-bit indication could indicate if {0, 1, 2, 3} WUS records are included). |
| WA bit | Indication that all UEs shall consider the WUS to have been received and trigger legacy monitoring of paging. |
| WRA bit | Indication that all UEs shall consider the WUS to have been received and trigger random access. |
| PWS bit | Public warning system indication to UEs. |
| E bit | ETWS (earthquake and tsunami warning system) indication to UEs. |
| C bit | CMAS indication to UEs. Could be combined with the E bit to correspond to bit 2 in the Short Message in TS 38.331. |

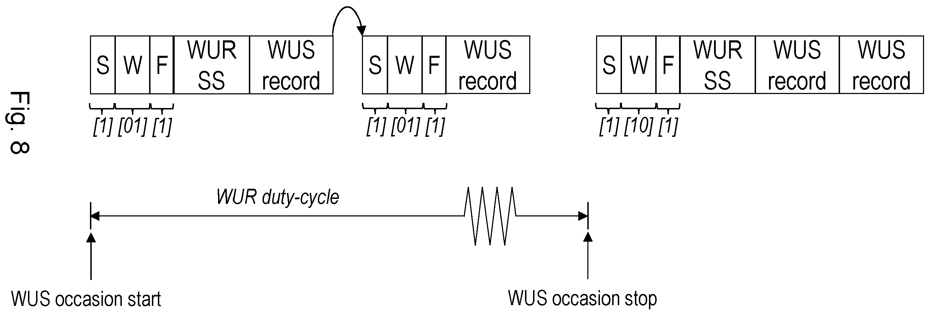

An example is shown in **Figure 8.** Figure 8 shows a schematic overview of WUS header operations. In this example, the first header in the first WUS monitoring occasion, such as the header in the first US message, indicate that a WUR Synchronization Signal (WUR-SS) is included for synchronization, that one WUS record in included, and that a second WUS message, such as a subsequent WUS message, is linked and will follow. The second header, such as the header of the subsequent WUS message, indicates that the sync part is not included and that this is the final WUS record, or WUS message. In the subsequent WUS monitoring occasion the header indicates that there is only one WUS message comprising the sync part and two WUS records.

*WUS payload adjustment*

In practice, the WUS may need to be generated using an OFDM transmitter to ensure efficient coexistence with other NR transmissions. In this case, the WUS may span over M OFDM symbols where M depends on the WUS payload, data rate requirement, and subcarrier spacing. Assuming that within each OFDM symbol K bits are transmitted, the total payload size is K*M. Therefore, to have an integer number of OFDM symbols for WUS transmissions, there may be constraints on the feasible size of WUS payload. According example embodiments herein, the total WUS payload may not be fixed, and it may not perfectly fit within integer number of OFDM symbols.

In one example, the WUS payload may be adjusted to ensure that it may be transmitted within an integer number of OFDM symbols. For example, zero padding may be considered to adjust the payload size. Specifically, let P be the original payload size, and each OFDM symbol K bits. For WUS transmissions, M=[P/K] OFDM symbols are needed, where $\lceil . \rceil$ is a ceiling function. In this case, (MK-P) bits, e.g., zero padding, may be added to the original payload to ensure the WUS spans M OFDM symbols. Such zero pads can be inserted, for example, at the end of the WUS structure.

In a related example, new indication bits, e.g., Z bits, may be added to indicate the number of added bits for payload adjustment which the group of UEs 121, 122 needs to discard.

*Partial UE ID in linked WUS*

The above examples describe how a series of WUS records, each comprising the full 48-bit 5G-S-TMSI may be transmitted in the same WUS, such as in WUS messages, occasion so that each transmission, e.g., of a WUS message, if many are needed, may be linked to the next one.

Regardless on how the WUS records are split in different transmissions, in a further example, the WUS record does not contain the full 48-bit 5G-S-TMSIm which is instead split in consecutive records instead. With a shorter payload the expected performance of the WUS reception may be better. On the other hand, there may be a probability to false page of other UEs but depending on the length of the WUS record the wasted energy may be limited.

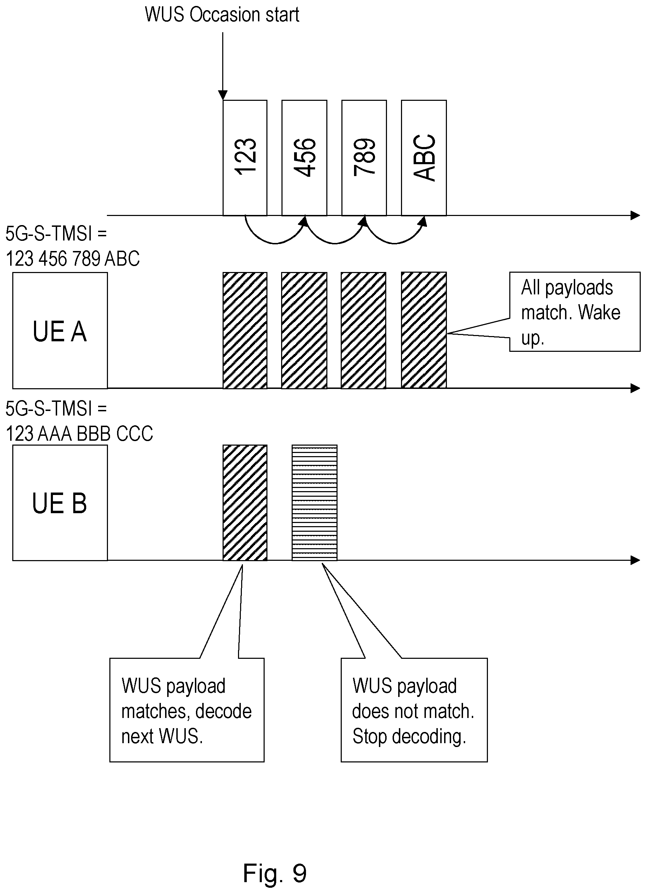

In a non-limiting example shown in **Figure 9,** it may be assumed that the 48-bit 5G-S-TMSI is divided in 4 12-bit segments. Thus, the full identifier may be delivered in 4 consecutive, such as subsequent, WUS records. In this example 2 UEs, such as the two UEs 121, 122 in the group of UEs 121, 122, are monitoring the same WUS occasions. One UE, the UE 121, is associated to the 5G-S-TMSI comprised in the WUS record, while the other UE, the UE 122, is associated to a 5G-S-TMSI that differs in the last 36 bits. In the example each WUS message, such as the first WUS message and the one or more subsequent WUS messages, comprises only 1 WUS record, but the records may be aggregated differently according to what explained in previous examples. In this examples, both the UE 121 and the UE 122 may decode the first WUS message, and thus also the first WUS record, and determine that the 12 bits in the first WUS record match the first 12 bits of their respective associated 5G-S-TMSI. When decoding the following, linked and/or chained, subsequent WUS message, the UE 121 may again determines the 12 bits in the subsequent WUS record match the 12 bits of its 5G-S-TMSI subsequent to the 12 bits in the first WUS record. The UE 122 may determine that the 12 bits in the subsequent WUS message does not match the 12 bits of its 5G-S-TMSI subsequent to the 12 bits in the first WUS record, and thus stops, such as refrains from, decoding any following subsequent WUS messages.

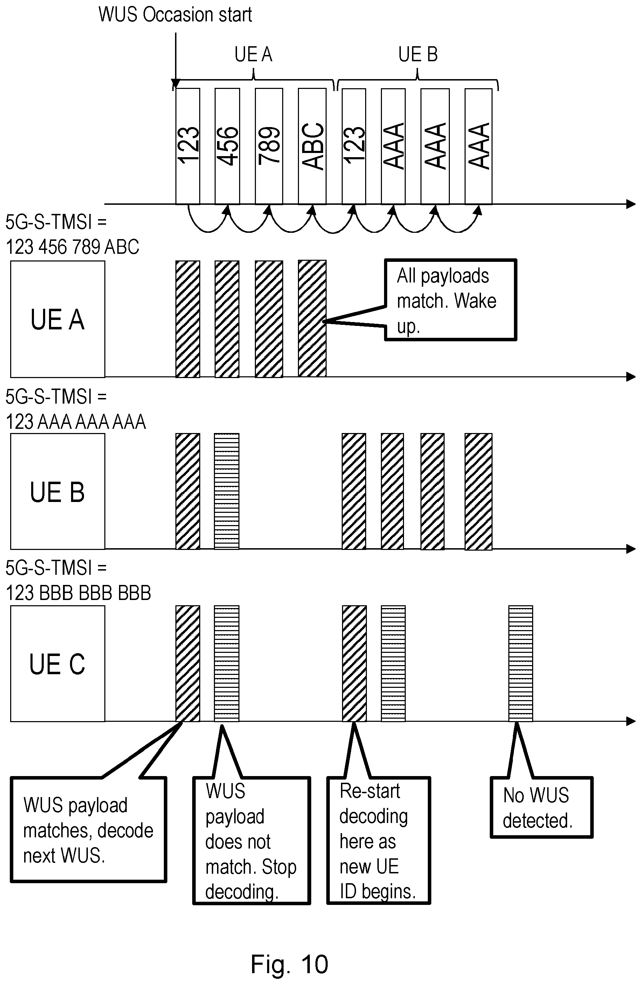

**Figure 10** shows an example where multiple UEs, such as the UEs 121, 122, are addressed in the same WUS occasion. In such an example, more consecutive WUS records, and/or WUS messages, may be consecutively linked. Following the same example as before, every 4th WUS record a new UE Identifier will begin. A UE should at least decode the first transmission related to each 5G-S-TMSI until it recognizes its own identifier. This is possible if the WUS transmissions happen at predictable times and if the UE has sufficient precision to skip a few WUS transmissions and still correctly decode the next ones. This example modifies the previous ones only in the size and content of the WUS record, such as WUS message, and which WUS message a UE may avoid to decode. The WUS may be linked through the methods described in previous examples.

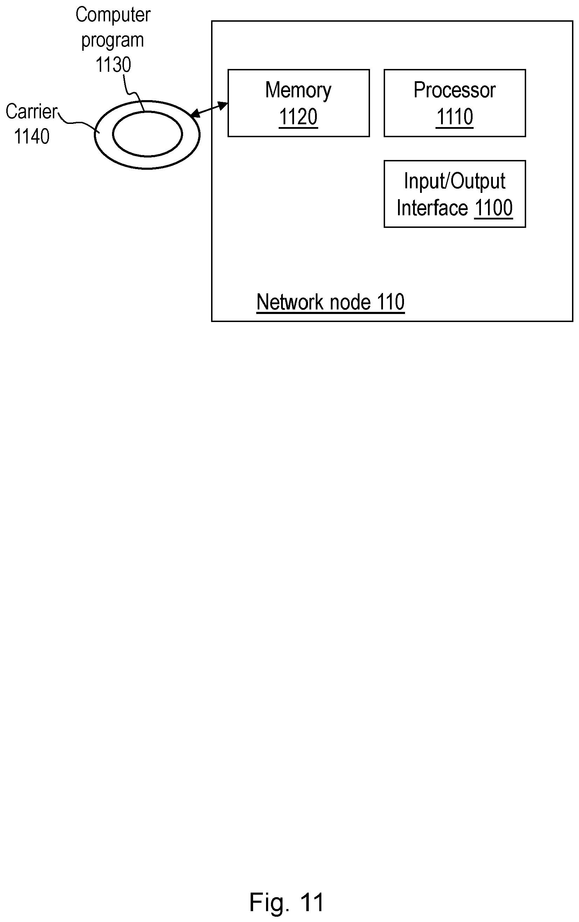

**Figure 11** shows an example of arrangement in the network node 110.

The network node 110 may comprise **an input and output interface 1100** configured to communicate with each other. The input and output interface 1100 may comprise a receiver, e.g. wired and/or wireless, (not shown) and a

transmitter, e.g. wired and/or wireless, (not shown).

The embodiments herein may be implemented through a respective processor or one or more processors, such as at least one **processor 1110** of a processing circuitry in the network node 110 depicted in Figure 11, together with computer program code for performing the functions and actions of the embodiments herein. The program code mentioned above may also be provided as a computer program product, for instance in the form of a data carrier carrying computer program code for performing the embodiments herein when being loaded into the network node 110. One such carrier may be in the form of a CD ROM disc. It is however feasible with other data carriers such as a memory stick. The computer program code may furthermore be provided as pure program code on a server and downloaded to the network node 110.

The network node 110 may further comprise respective a **memory 1120** comprising one or more memory units. The memory 1120 comprises instructions executable by the processor in the network node 110.

The memory 1120 is arranged to be used to store instructions, data, configurations, identifiers, WUS records, WUS messages, indications, notifications and applications to perform the methods herein when being executed in the network node 110.

In some embodiments, a **computer program 1130** comprises instructions, which when executed by the at least one processor 1110, cause the at least one processor 1110 of the network node 110 to perform the actions above.

In some embodiments, a respective **carrier 1140** comprises the respective computer program 1130, wherein the carrier 1140 is one of an electronic signal, an optical signal, an electromagnetic signal, a magnetic signal, an electric signal, a radio signal, a microwave signal, or a computer-readable storage medium.

Those skilled in the art will also appreciate that the functional modules in the network node 110, described below may refer to a combination of analog and digital circuits, and/or one or more processors configured with software and/or firmware, e.g. stored in the network node 110, that when executed by the respective one or more processors such as the at least one processor 1110 described above cause the respective at least one processor 1110 to perform actions according to any of the actions above. One or more of these processors, as well as the other digital hardware, may be included in a single Application-Specific Integrated Circuitry (ASIC), or several processors and various digital hardware may be distributed among several separate components, whether individually packaged or assembled into a system-on-a-chip (SoC).

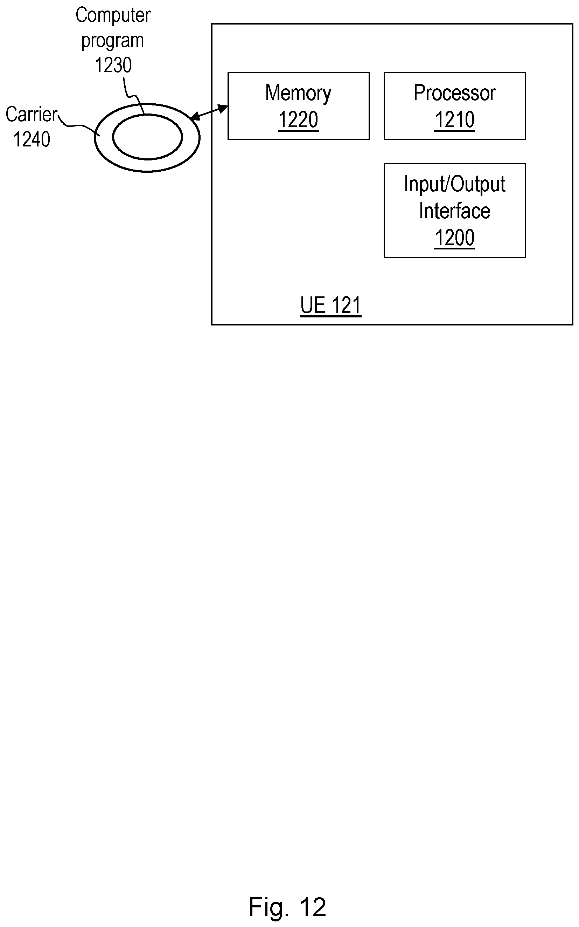

**Figure 12** shows an example of arrangement in the UE 121.

The UE 121 may comprise **an input and output interface 1200** configured to communicate with each other. The input and output interface 1200 may comprise a receiver, e.g. wired and/or wireless, (not shown) and a transmitter, e.g. wired and/or wireless, (not shown).

The embodiments herein may be implemented through a respective processor or one or more processors, such as at least one **processor 1210** of a processing circuitry in the UE 121 depicted in Figure 12, together with computer program code for performing the functions and actions of the embodiments herein. The program code mentioned above may also be provided as a computer program product, for instance in the form of a data carrier carrying computer program code for performing the embodiments herein when being loaded into the UE 121. One such carrier may be in the form of a CD ROM disc. It is however feasible with other data carriers such as a memory stick. The computer program code may furthermore be provided as pure program code on a server and downloaded to the UE 121.

The UE 121 may further comprise respective a **memory 1220** comprising one or more memory units. The memory 1220 comprises instructions executable by the processor in the UE 121.

The memory 1220 is arranged to be used to store instructions, data, configurations, identifiers, WUS records, WUS messages, indications, notifications and applications to perform the methods herein when being executed in the UE 121.

In some embodiments, a **computer program 1230** comprises instructions, which when executed by the at least one processor 1210, cause the at least one processor 1210 of the UE 121 to perform the actions above.

In some embodiments, a respective **carrier 1240** comprises the respective computer program 1230, wherein the carrier 1240 is one of an electronic signal, an optical signal, an electromagnetic signal, a magnetic signal, an electric signal, a radio signal, a microwave signal, or a computer-readable storage medium.

Those skilled in the art will also appreciate that the functional modules in the UE 121, described below may refer to a combination of analog and digital circuits, and/or one or more processors configured with software and/or firmware, e.g. stored in the UE 121, that when executed by the respective one or more processors such as the at least one processor 1210 described above cause the respective at least one processor 1210 to perform actions according to any of the actions above. One or more of these processors, as well as the other digital hardware, may be included in a single Application-Specific Integrated Circuitry (ASIC), or several processors and various digital hardware may be distributed among several separate components, whether individually packaged or assembled into a system-on-a-chip (SoC).

When using the word "comprise" or "comprising" it shall be interpreted as non-limiting, i.e. meaning "consist at least of".

## Further Extensions and Variations

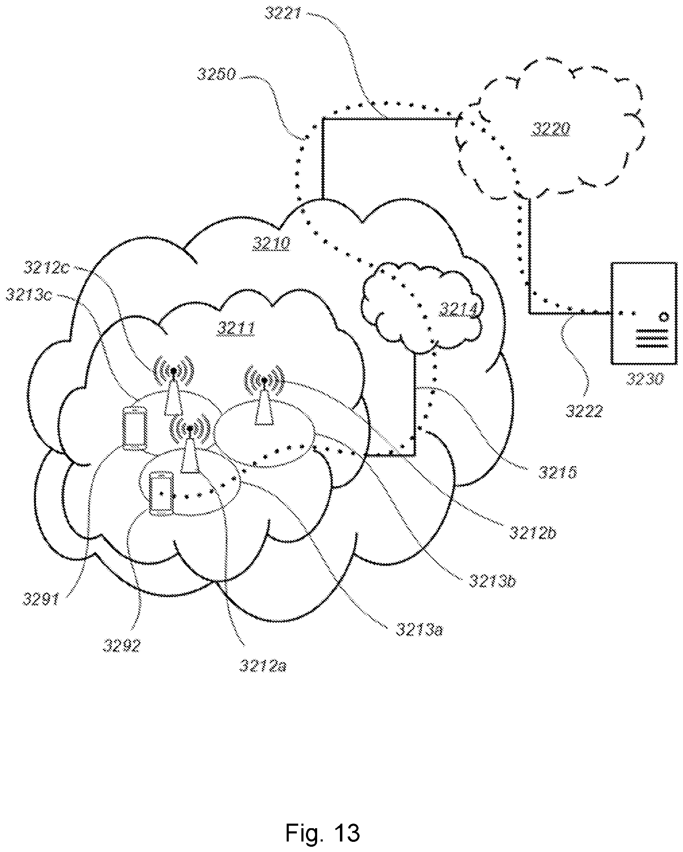

With reference to **Figure 13,** in accordance with an embodiment, a communication system includes a telecommunication network 3210 such as the wireless communications network 100, e.g. an IoT network, or a WLAN, such as a 3GPP-type cellular network, which comprises an access network 3211, such as a radio access network, and a core network 3214. The access network 3211 comprises a plurality of base stations 3212a, 3212b, 3212c, AP STAs NBs, eNBs, gNBs or other types of wireless access points, such as e.g., the network node 110, each defining a corresponding coverage area 3213a, 3213b, 3213c. Each base station 3212a, 3212b, 3212c is connectable to the core network 3214 over a wired or wireless connection 3215. A first user equipment (UE) e.g. the UE 121 such as a Non-AP STA 3291 located in coverage area 3213c is configured to wirelessly connect to, or be paged by, the corresponding base station 3212c. A second UE 3292 e.g. the UE 122 such as a Non-AP STA in coverage area 3213a is wirelessly connectable to the corresponding base station 3212a. While a plurality of UEs 3291, 3292, such as the group of UEs 121, 122, are illustrated in this example, the disclosed embodiments are equally applicable to a situation where a sole UE is in the coverage area or where a sole UE is connecting to the corresponding base station 3212.

The telecommunication network 3210 is itself connected to a host computer 3230, which may be embodied in the hardware and/or software of a standalone server, a cloud-implemented server, a distributed server or as processing resources in a server farm. The host computer 3230 may be under the ownership or control of a service provider, or may be operated by the service provider or on behalf of the service provider. The connections 3221, 3222 between the telecommunication network 3210 and the host computer 3230 may extend directly from the core network 3214 to the host computer 3230 or may go via an optional intermediate network 3220. The intermediate network 3220 may be one of, or a combination of more than one of, a public, private or hosted network; the intermediate network 3220, if any, may be a backbone network or the Internet; in particular, the intermediate network 3220 may comprise two or more sub-networks (not shown).

The core network 3214 may comprise e.g. the user plane node 110, the session management node 130 and the storage node 140.

The communication system of Figure 13 as a whole enables connectivity between one of the connected UEs 3291, 3292 and the host computer 3230. The connectivity may be described as an over-the-top (OTT) connection 3250. The host computer 3230 and the connected UEs 3291, 3292 are configured to communicate data and/or signaling via the OTT connection 3250, using the access network 3211, the core network 3214, any intermediate network 3220 and possible further infrastructure (not shown) as intermediaries. The OTT connection 3250 may be transparent in the sense that the participating communication devices through which the OTT connection 3250 passes are unaware of routing of uplink and downlink communications. For example, a base station 3212 may not or need not be informed about the past routing of an incoming downlink communication with data originating from a host computer 3230 to be forwarded (e.g., handed over) to a connected UE 3291. Similarly, the base station 3212 need not be aware of the future routing of an outgoing uplink communication originating from the UE 3291 towards the host computer 3230.

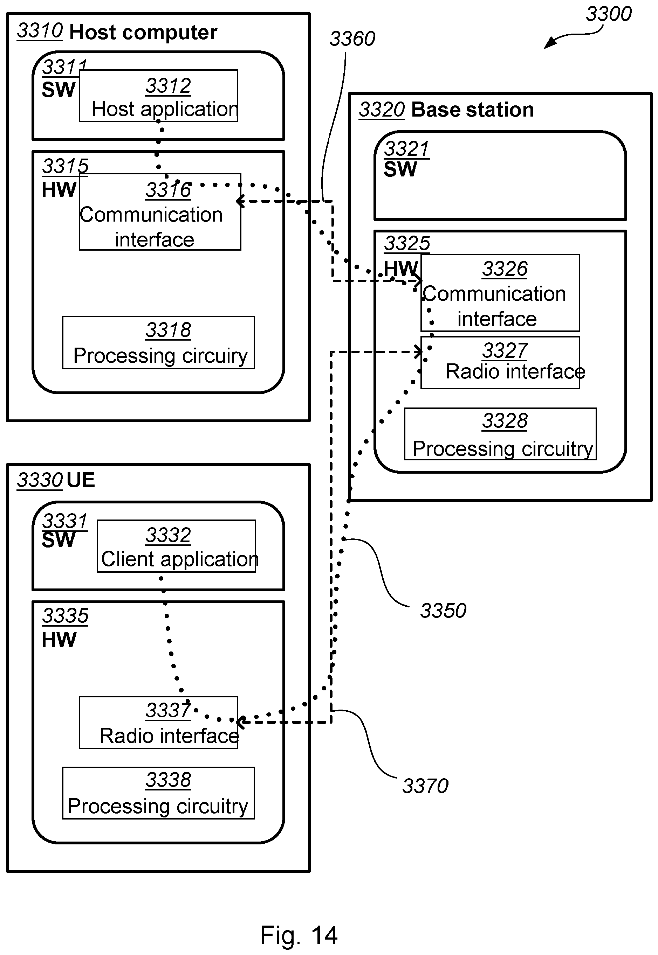

Example implementations, in accordance with an embodiment, of the UE, base station and host computer discussed in the preceding paragraphs will now be described with reference to **Figure 14.** In a communication system 3300, a host computer 3310 comprises hardware 3315 including a communication interface 3316 configured to set up and maintain a wired or wireless connection with an interface of a different communication device of the communication system 3300. The host computer 3310 further comprises processing circuitry 3318, which may have storage and/or processing capabilities. In particular, the processing circuitry 3318 may comprise one or more programmable processors, application-specific integrated circuits, field programmable gate arrays or combinations of these (not shown) adapted to execute instructions. The host computer 3310 further comprises software 3311, which is stored in or accessible by the host computer 3310 and executable by the processing circuitry 3318. The software 3311 includes a host application 3312. The host application 3312 may be operable to provide a service to a remote user, such as a UE 3330 connecting via an OTT connection 3350 terminating at the UE 3330 and the host computer 3310. In providing the service to the remote user, the host application 3312 may provide user data which is transmitted using the OTT connection 3350.

The communication system 3300 further includes a base station 3320 provided in a telecommunication system and comprising hardware 3325 enabling it to communicate with the host computer 3310 and with the UE 3330. The hardware 3325 may include a communication interface 3326 for setting up and maintaining a wired or wireless connection with an interface of a different communication device of the communication system 3300, as well as a radio interface 3327 for setting up and maintaining at least a wireless connection 3370 with a UE 3330 located in a coverage area (not shown) served by the base station 3320. The communication interface 3326 may be configured to facilitate a connection 3360 to the host computer 3310. The connection 3360 may be direct or it may pass through a core network (not shown in Figure 14) of the telecommunication system and/or through one or more intermediate networks outside the telecommunication system. In the embodiment shown, the hardware 3325 of the base station 3320 further includes processing circuitry 3328, which may comprise one or more programmable processors, application-specific integrated circuits, field programmable gate arrays or combinations of these (not shown) adapted to execute instructions. The base station 3320 further has

software 3321 stored internally or accessible via an external connection.

The communication system 3300 further includes the UE 3330 already referred to. Its hardware 3335 may include a radio interface 3337 configured to set up and maintain a wireless connection 3370 with a base station serving a coverage area in which the UE 3330 is currently located. The hardware 3335 of the UE 3330 further includes processing circuitry 3338, which may comprise one or more programmable processors, application-specific integrated circuits, field programmable gate arrays or combinations of these (not shown) adapted to execute instructions. The UE 3330 further comprises software 3331, which is stored in or accessible by the UE 3330 and executable by the processing circuitry 3338. The software 3331 includes a client application 3332. The client application 3332 may be operable to provide a service to a human or non-human user via the UE 3330, with the support of the host computer 3310. In the host computer 3310, an executing host application 3312 may communicate with the executing client application 3332 via the OTT connection 3350 terminating at the UE 3330 and the host computer 3310. In providing the service to the user, the client application 3332 may receive request data from the host application 3312 and provide user data in response to the request data. The OTT connection 3350 may transfer both the request data and the user data. The client application 3332 may interact with the user to generate the user data that it provides.

It is noted that the host computer 3310, base station 3320 and UE 3330 illustrated in Figure 14 may be identical to the host computer 3230, one of the base stations 3212a, 3212b, 3212c and one of the UEs 3291, 3292 of Figure 13, respectively. This is to say, the inner workings of these entities may be as shown in Figure 14 and independently, the surrounding network topology may be that of Figure 13.

In Figure 14, the OTT connection 3350 has been drawn abstractly to illustrate the communication between the host computer 3310 and the use equipment 3330 via the base station 3320, without explicit reference to any intermediary devices and the precise routing of messages via these devices. Network infrastructure may determine the routing, which it may be configured to hide from the UE 3330 or from the service provider operating the host computer 3310, or both. While the OTT connection 3350 is active, the network infrastructure may further take decisions by which it dynamically changes the routing (e.g., on the basis of load balancing consideration or reconfiguration of the network).

The wireless connection 3370 between the UE 3330 and the base station 3320 is in accordance with the teachings of the embodiments described throughout this disclosure. One or more of the various embodiments improve the performance of OTT services provided to the UE 3330 using the OTT connection 3350, in which the wireless connection 3370 forms the last segment. More precisely, the teachings of these embodiments may improve the applicable **RAN** effect: data rate, latency, power consumption, and thereby provide benefits such as corresponding effect on the **OTT service:** e.g. reduced user waiting time, relaxed restriction on file size, better responsiveness, extended battery lifetime.

A measurement procedure may be provided for the purpose of monitoring data rate, latency and other factors on which the one or more embodiments improve. There may further be an optional network functionality for reconfiguring the OTT connection 3350 between the host computer 3310 and UE 3330, in response to variations in the measurement results. The measurement procedure and/or the network functionality for reconfiguring the OTT connection 3350 may be implemented in the software 3311 of the host computer 3310 or in the software 3331 of the UE 3330, or both. In embodiments, sensors (not shown) may be deployed in or in association with communication devices through which the OTT connection 3350 passes; the sensors may participate in the measurement procedure by supplying values of the monitored quantities exemplified above, or supplying values of other physical quantities from which software 3311, 3331 may compute or estimate the monitored quantities. The reconfiguring of the OTT connection 3350 may include message format, retransmission settings, preferred routing etc.; the reconfiguring need not affect the base station 3320, and it may be unknown or imperceptible to the base station 3320. Such procedures and functionalities may be known and practiced in the art. In certain embodiments, measurements may involve proprietary UE signaling facilitating the host computer's 3310 measurements of throughput, propagation times, latency and the like. The measurements may be implemented in that the software 3311, 3331 causes messages to be transmitted, in particular empty or 'dummy' messages, using the OTT connection 3350 while it monitors propagation times, errors etc.

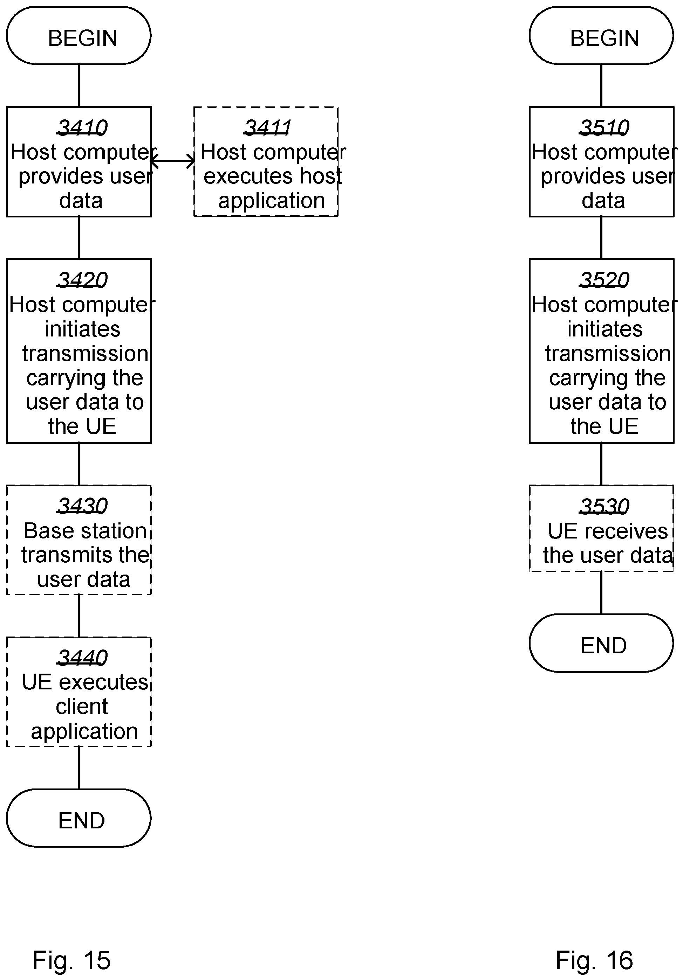

**Figure 15** is a flowchart illustrating a method implemented in a communication system, in accordance with one embodiment. The communication system includes a host computer, a base station such as the network node 112, and a UE such as the UE 120, which may be those described with reference to Figure 13 and Figure 14. For simplicity of the present disclosure, only drawing references to Figure 15 will be included in this section. In a first action 3410 of the method, the host computer provides user data. In an optional subaction 3411 of the first action 3410, the host computer provides the user data by executing a host application. In a second action 3420, the host computer initiates a transmission carrying the user data to the UE. In an optional third action 3430, the base station transmits to the UE the user data which was carried in the transmission that the host computer initiated, in accordance with the teachings of the embodiments described throughout this disclosure. In an optional fourth action 3440, the UE executes a client application associated with the host application executed by the host computer.

**Figure 16** is a flowchart illustrating a method implemented in a communication system, in accordance with one embodiment. The communication system includes a host computer, a base station such as an AP STA, and a UE such as a Non-AP STA which may be those described with reference to Figure 13 and Figure 14. For simplicity of the present

disclosure, only drawing references to Figure 16 will be included in this section. In a first action 3510 of the method, the host computer provides user data. In an optional subaction (not shown) the host computer provides the user data by executing a host application. In a second action 3520, the host computer initiates a transmission carrying the user data to the UE. The transmission may pass via the base station, in accordance with the teachings of the embodiments described throughout this disclosure. In an optional third action 3530, the UE receives the user data carried in the transmission.

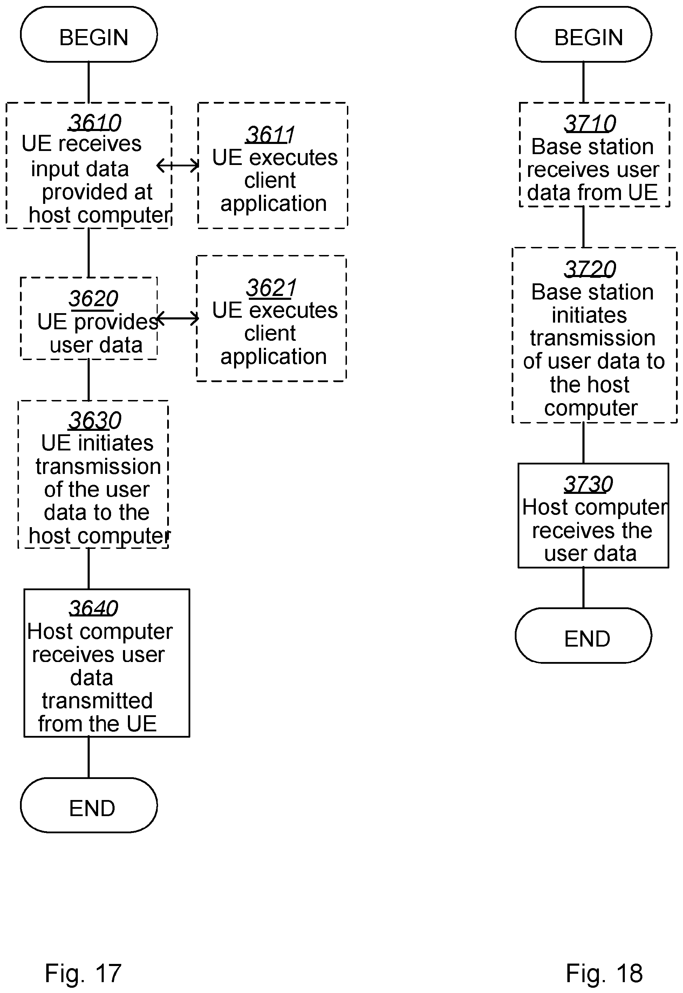

**Figure 17** is a flowchart illustrating a method implemented in a communication system, in accordance with one embodiment. The communication system includes a host computer, a base station such as an AP STA, and a UE such as a Non-AP STA which may be those described with reference to Figure 13 and Figure 14. For simplicity of the present disclosure, only drawing references to Figure 17 will be included in this section. In an optional first action 3610 of the method, the UE receives input data provided by the host computer. Additionally or alternatively, in an optional second action 3620, the UE provides user data. In an optional subaction 3621 of the second action 3620, the UE provides the user data by executing a client application. In a further optional subaction 3611 of the first action 3610, the UE executes a client application which provides the user data in reaction to the received input data provided by the host computer. In providing the user data, the executed client application may further consider user input received from the user. Regardless of the specific manner in which the user data was provided, the UE initiates, in an optional third subaction 3630, transmission of the user data to the host computer. In a fourth action 3640 of the method, the host computer receives the user data transmitted from the UE, in accordance with the teachings of the embodiments described throughout this disclosure.

**Figure 18** is a flowchart illustrating a method implemented in a communication system, in accordance with one embodiment. The communication system includes a host computer, a base station such as an AP STA, and a UE such as a Non-AP STA which may be those described with reference to Figure 13 and Figure 14. For simplicity of the present disclosure, only drawing references to Figure 18 will be included in this section. In an optional first action 3710 of the method, in accordance with the teachings of the embodiments described throughout this disclosure, the base station receives user data from the UE. In an optional second action 3720, the base station initiates transmission of the received user data to the host computer. In a third action 3730, the host computer receives the user data carried in the transmission initiated by the base station.

## Claims

**1.** A method performed by a network node (110) for broadcasting a wake-up signal, WUS, message for waking up User Equipments, UEs, in a group of UEs (121, 122), wherein the group of UEs (121, 122) is served by the network node (110) in a wireless communications network (100), the method comprising:

*preparing* (501) a set of WUS records, each WUS record comprising an identity related to a UE in the group of UEs (121, 122),
*broadcasting* (502) a first WUS message to the group of UEs (121, 122), which first WUS message comprises at least one first prepared WUS record out of the set of WUS records, wherein a header of the first WUS message comprises an indication indicating that a subsequent WUS message is to be decoded by the group of UEs (121, 122),
*broadcasting* (503) one by one, a number of subsequent WUS messages to the group of UEs (121, 122), wherein each respective subsequent WUS message comprises at least one respective prepared subsequent WUS record out of the set of WUS records and a respective header comprising an indication indicating whether or not a further subsequent WUS message is to be decoded by the group of UEs (121, 122), wherein the indication in the last subsequent WUS message indicates that no further subsequent WUS messages is to be decoded,
wherein the first WUS message and the number of subsequent WUS messages are broadcasted in the same WUS occasion.

**2.** The method according to claim 1, wherein the identity related to a UE (121) comprises any one out of:

- an identity of a specific UE (121) in the group of UEs (121), or
- an identify associated to a subgroup of UEs (121) in the group of UEs (121).

**3.** The method according to any of claims 1-2, wherein a WUS message comprises a plurality of prepared WUS records.

**4.** The method according to claim 3, wherein the header of a WUS message comprising a plurality of prepared WUS records, comprises an indication indicating the number of prepared WUS records comprised in the WUS message.

**5.** A method performed by a User Equipment, UE, (121) for receiving a wake-up signal, WUS, message for waking up

UEs in a group of UEs (121, 122), wherein the group of UEs (121, 122) is served by the network node (110) in a wireless communications network (100), the UE (121) operating in a low power state, the method comprising:

*receiving* (601) a first WUS message broadcasted by a network node (110), which first WUS message comprises at least one first prepared WUS record out of a set of WUS records, each WUS record comprising an identity related to a UE in the group of UEs (121, 122), wherein a header of the first WUS message comprises an indication indicating that a subsequent WUS message is to be decoded by the group of UEs (121, 122),
*decoding* (602) the first WUS message, which *decoding* (602) comprises *determining* whether the identifier in the first WUS record is related to the UE (121),
when determining that the identity is related to the UE (121), *waking* (603) up and performing a first action associated to receiving a WUS message, wherein *waking* (603) up further comprises refraining from decoding any subsequent WUS message.
when determining that the identity is not related to the UE (121), *decoding* (604) one by one, a number of subsequent WUS messages broadcasted by the network node (110), wherein each respective subsequent WUS message comprises at least one respective prepared subsequent WUS record out of the set of WUS records and a respective header comprising an indication indicating whether or not a further subsequent WUS message is to be decoded by the group of UEs (121, 122), wherein the indication in the last subsequent WUS message indicates that no further subsequent WUS messages is to be decoded, which decoding comprises *determining* one by one, whether the identifier in the respective WUS records is related to the UE (121), and based on whether the identifier is related to the UE (121) performing a second action,
wherein the first WUS message and the number of subsequent WUS messages are adapted to be broadcasted in the same WUS occasion.

**6.** The method according to claim 5 wherein performing the second action comprises any one out of:

- waking up and performing the first action associated to receiving a WUS message and refraining from decoding any subsequent WUS message,
- decoding a further subsequent WUS message, or
- remaining in the low power state.

**7.** The method according to any of claims 5-6, 0, wherein when determining that the identifier comprised in the last subsequent WUS record is not related to the UE (121), remaining in the low power state.

**8.** The method according to any of claims 5-7, 1, wherein the identity related to a UE (121) comprises any one out of:

- an identity of a specific UE (121) in the group of UEs (121), or
- an identify associated to a subgroup of UEs (121) in the group of UEs (121).

**9.** The method according to any of claims 5-8, wherein a WUS message comprises a plurality of prepared WUS records.

**10.** The method according to claim 9, wherein the header of a WUS message comprising a plurality of prepared WUS records, comprises an indication indicating the number of prepared WUS records comprised in the WUS message.

**11.** A network node (110) configured to broadcast a wake-up signal, WUS, message for waking up User Equipments, UEs, in a group of UEs (121, 122), wherein the group of UEs (121, 122) is served by the network node (110) in a wireless communications network (100), the network node (110) further being configured to:

*prepare* a set of WUS records, each WUS record adapted to comprise an identity related to a UE in the group of UEs (121, 122),
*broadcast* a first WUS message to the group of UEs (121, 122), which first WUS message is adapted to comprise at least one first prepared WUS record out of the set of WUS records, wherein a header of the first WUS message is adapted to comprise an indication adapted to indicate that a subsequent WUS message is to be decoded by the group of UEs (121, 122),
*broadcast* one by one, a number of subsequent WUS messages to the group of UEs (121, 122), wherein each respective subsequent WUS message is adapted to comprise at least one respective prepared subsequent WUS record out of the set of WUS records and a respective header adapted to comprise an indication adapted to indicate whether or not a further subsequent WUS message is to be decoded by the group of UEs (121, 122), wherein the indication in the last subsequent WUS message is adapted to indicate that no further subsequent

WUS messages is to be decoded,
wherein the first WUS message and the number of subsequent WUS messages are adapted to be broadcasted in the same WUS occasion.

**12.** The network node (110) according to claim 11, wherein the network node is adapted to perform the method of any of claims 2-4.

**13.** A User Equipment, UE, (121) configured to receive a wake-up signal, WUS, message for waking up UEs in a group of UEs (121, 122), wherein the group of UEs (121, 122) is are adapted to be served by the network node (110) in a wireless communications network (100), the UE (121) adapted to operate in a low power state, the UE (121) further being configured to:

*receive* a first WUS message broadcasted by a network node (110), which first WUS message is adapted to comprise at least one first prepared WUS record out of a set of WUS records, each WUS record comprising an identity related to a UE in the group of UEs (121, 122), wherein a header of the first WUS message is adapted to comprise an indication indicating that a subsequent WUS message is to be decoded by the group of UEs (121, 122),
*decode* the first WUS message, wherein to *decode* is adapted to comprise to *determine* whether the identifier in the first WUS record is related to the UE,
when determined that the identity is related to the UE (121), *wake* up and perform a first action associated to receiving a WUS message, wherein to *wake* up is further adapted to comprise to refrain from decoding any subsequent WUS message.
when determined that the identity is not related to the UE (121), *decode* one by one, a number of subsequent WUS messages broadcasted by the network node (110), wherein each respective subsequent WUS message is adapted to comprise at least one respective prepared subsequent WUS record out of the set of WUS records and a respective header adapted to comprise an indication adapted to indicate whether or not a further subsequent WUS message is to be decoded by the group of UEs (121, 122), wherein the indication in the last subsequent WUS message is adapted to indicate that no further subsequent WUS messages is to be decoded, wherein to decode is adapted to comprise to *determine* one by one, whether the identifier in the respective WUS records is related to the UE (121), and based on whether the identifier is related to the UE (121) perform a second action,
wherein the first WUS message and the number of subsequent WUS messages are adapted to be broadcasted in the same WUS occasion.

**14.** The UE (121) according to claim 13, wherein the UE is adapted to perform the method of any of claims 6-10

## Patentansprüche

**1.** Verfahren, das von einem Netzwerkknoten (110) durchgeführt wird, zum Senden einer Wecksignalnachricht, WUS-Nachricht, per Broadcast zum Wecken von Benutzereinrichtungen, UEs, in einer Gruppe von UEs (121, 122), wobei die Gruppe von UEs (121, 122) von dem Netzwerkknoten (110) in einem drahtlosen Netzwerk (100) bedient wird, wobei das Verfahren Folgendes umfasst:

Vorbereiten (501) eines Satzes von WUS-Datensätzen, wobei jeder WUS-Datensatz ein Identität umfasst, die einer UE in der Gruppe von UEs (121, 122) zugeordnet ist,
Senden (502) einer ersten WUS-Nachricht per Broadcast an die Gruppe von UEs (121, 122), wobei die erste WUS-Nachricht mindestens einen ersten vorbereiteten WUS-Datensatz aus dem Satz von WUS-Datensätzen umfasst, wobei ein Header der ersten WUS-Nachricht eine Angabe umfasst, die angibt, dass eine nachfolgende WUS-Nachricht von der Gruppe von UEs (121, 122) decodiert werden soll,
Senden (503) nacheinander einer Anzahl von nachfolgenden WUS-Nachrichten per Broadcast an die Gruppe von UEs (121, 122), wobei jede jeweilige nachfolgende WUS-Nachricht mindestens einen jeweiligen vorbereiteten nachfolgenden WUS-Datensatz aus dem Satz von WUS-Datensätzen und einen jeweiligen Header umfasst, der eine Angabe umfasst, die angibt, ob eine weitere nachfolgende WUS-Nachricht von der Gruppe von UEs (121, 122) decodiert werden soll oder nicht, wobei die Angabe in der letzten nachfolgenden WUS-Nachricht angibt, dass keine weiteren nachfolgenden WUS-Nachrichten decodiert werden sollen,
wobei die erste WUS-Nachricht und die Anzahl von nachfolgenden WUS-Nachrichten bei derselben WUS-Gelegenheit per Broadcast gesendet werden.

2. Verfahren nach Anspruch 1, wobei die einer UE (121) zugeordnete Identität eine von folgenden umfasst:

- eine Identität einer spezifischen UE (121) in der Gruppe von UEs (121) oder
- eine Identität, die mit einer Untergruppe von UEs (121) in der Gruppe von UEs (121) assoziiert ist.

3. Verfahren nach der Ansprüche 1-2, wobei eine WUS-Nachricht eine Mehrzahl von vorbereiteten WUS-Datensätzen umfasst.

4. Verfahren nach Anspruch 3, wobei der Header einer WUS-Nachricht, die eine Mehrzahl von vorbereiteten WUS-Datensätzen umfasst, eine Angabe umfasst, die die Anzahl von vorbereiteten WUS-Datensätzen angibt, die in der WUS-Nachricht umfasst sind.

5. Verfahren, das von einer Benutzereinrichtung (121) durchgeführt wird, zum Empfangen einer Wecksignalnachricht, WUS-Nachricht, zum Wecken von UEs in einer Gruppe von UEs (121, 122), wobei die Gruppe von UEs (121, 122) von dem Netzwerkknoten (110) in einem drahtlosen Netzwerk (100) bedient wird, wobei die UE (121) in einem Niedrigleistungszustand arbeitet und das Verfahren Folgendes umfasst:

Empfangen (601) einer ersten WUS-Nachricht, die von einem Netzwerkknoten (110) per Broadcast gesendet wird, wobei die erste WUS-Nachricht mindestens einen ersten vorbereiteten WUS-Datensatz aus einem Satz WUS-Datensätzen umfasst, wobei jeder WUS-Datensatz eine Identität umfasst, die einer UE in der Gruppe von UEs (121, 122) zugeordnet ist, wobei ein Header der ersten WUS-Nachricht eine Angabe umfasst, die angibt, dass eine nachfolgende WUS-Nachricht von der Gruppe von UEs (121, 122) decodiert werden soll,
Decodieren (602) der ersten WUS-Nachricht, wobei das Decodieren (602) Bestimmen umfasst, ob die Kennung in dem ersten WUS-Datensatz der UE (121) zugeordnet ist,
bei Bestimmen, dass die Identität der UE (121) zugeordnet ist, Aufwachen (603) und Durchführen einer ersten Aktion, die mit dem Empfang einer WUS-Nachricht assoziiert ist, wobei das Aufwachen (603) ferner Unterlassen des Decodierens jeglicher nachfolgender WUS-Nachricht umfasst,
bei Bestimmen, dass die Identität nicht der UE (121) zugeordnet ist, Decodieren (604) nacheinander einer Anzahl von nachfolgenden WUS-Nachrichten, die von dem Netzwerkknoten (110) per Broadcast gesendet werden, wobei jede jeweilige nachfolgende WUS-Nachricht mindestens einen jeweiligen vorbereiteten nachfolgenden WUS-Datensatz aus dem Satz von WUS-Datensätzen und einen jeweiligen Header umfasst, der eine Angabe umfasst, die angibt, ob eine weitere nachfolgende WUS-Nachricht von der Gruppe von UEs (121, 122) decodiert werden soll oder nicht, wobei die Angabe in der letzten nachfolgenden WUS-Nachricht angibt, dass keine weiteren nachfolgenden WUS-Nachrichten decodiert werden sollen, wobei das Decodieren Bestimmen nacheinander, ob die Kennung in den jeweiligen WUS-Datensätzen der UE (121) zugeordnet ist, und Durchführen einer zweiten Aktion basierend darauf umfasst, ob die Kennung der UE (121) zugeordnet ist,
wobei die erste WUS-Nachricht und die Anzahl von nachfolgenden WUS-Nachrichten so ausgelegt sind, dass sie bei derselben WUS-Gelegenheit per Broadcast gesendet werden.

6. Verfahren nach Anspruch 5, wobei das Durchführen der zweiten Aktion eines von Folgendem umfasst:

- Aufwachen und Durchführen der ersten Aktion, die mit dem Empfang einer WUS-Nachricht assoziiert ist, und Unterlassen des Decodierens jeglicher nachfolgender WUS-Nachricht,
- Decodieren einer weiteren nachfolgenden WUS-Nachricht oder
- Verbleiben im Niedrigleistungszustand.

7. Verfahren nach der Ansprüche 5-6, 0, wobei bei Bestimmen, dass die in dem letzten nachfolgenden WUS-Datensatz umfasste Kennung nicht der UE (121) zugeordnet ist, Verbleiben im Niedrigleistungszustand.

8. Verfahren nach Anspruch 5-7, 1, wobei die einer UE (121) zugeordnete Identität eine von folgenden umfasst:

- eine Identität einer spezifischen UE (121) in der Gruppe von UEs (121) oder
- eine Identität, die mit einer Untergruppe von UEs (121) in der Gruppe von UEs (121) assoziiert ist.

9. Verfahren nach der Ansprüche 5-8, wobei eine WUS-Nachricht eine Mehrzahl von vorbereiteten WUS-Datensätzen umfasst.

10. Verfahren nach Anspruch 9, wobei der Header einer WUS-Nachricht, die eine Mehrzahl von vorbereiteten WUS-

Datensätzen umfasst, eine Angabe umfasst, die die Anzahl von vorbereiteten WUS-Datensätzen angibt, die in der WUS-Nachricht umfasst sind.

**11.** Netzwerkknoten (110) der dazu konfiguriert ist, eine Wecksignalnachricht, WUS-Nachricht, zum Wecken von Benutzereinrichtungen, UEs, in einer Gruppe von UEs (121, 122) per Broadcast zu senden, wobei die Gruppe von UEs (121, 122) von dem Netzwerkknoten (110) in einem drahtlosen Netzwerk (100) bedient wird, wobei der Netzwerkknoten (110) ferner zu Folgendem konfiguriert ist:

Vorbereiten eines Satzes von WUS-Datensätzen, wobei jeder WUS-Datensatz so ausgelegt ist, dass er ein Identität umfasst, die einer UE in der Gruppe von UEs (121, 122) zugeordnet ist,
Senden einer ersten WUS-Nachricht per Broadcast an die Gruppe von UEs (121, 122), wobei die erste WUS-Nachricht so ausgelegt ist, dass sie mindestens einen ersten vorbereiteten WUS-Datensatz aus dem Satz von WUS-Datensätzen umfasst, wobei ein Header der ersten WUS-Nachricht so ausgelegt ist, dass er eine Angabe umfasst, die so ausgelegt ist, dass sie angibt, dass eine nachfolgende WUS-Nachricht von der Gruppe von UEs (121, 122) decodiert werden soll,
Senden nacheinander einer Anzahl von nachfolgenden WUS-Nachrichten per Broadcast an die Gruppe von UEs (121, 122), wobei jede jeweilige nachfolgende WUS-Nachricht so ausgelegt ist, dass sie mindestens einen jeweiligen vorbereiteten nachfolgenden WUS-Datensatz aus dem Satz von WUS-Datensätzen und einen jeweiligen Header umfasst, der so ausgelegt ist, dass er eine Angabe umfasst, die so ausgelegt ist, dass sie angibt, ob eine weitere nachfolgende WUS-Nachricht von der Gruppe von UEs (121, 122) decodiert werden soll oder nicht, wobei die Angabe in der letzten nachfolgenden WUS-Nachricht so ausgelegt ist, dass sie angibt, dass keine weiteren nachfolgenden WUS-Nachrichten decodiert werden sollen,
wobei die erste WUS-Nachricht und die Anzahl von nachfolgenden WUS-Nachrichten so ausgelegt sind, dass sie bei derselben WUS-Gelegenheit per Broadcast gesendet werden.

**12.** Netzwerkknoten (110) nach Anspruch 11, wobei der Netzwerkknoten so ausgelegt ist, dass er das Verfahren nach einem Ansprüche 2-4 durchführt.

**13.** Benutzereinrichtung, UE, (121), die dazu konfiguriert ist, eine Wecksignalnachricht, WUS-Nachricht, zum Wecken von UEs in einer Gruppe von UEs (121, 122) zu empfangen, wobei die Gruppe von UEs (121, 122) so ausgelegt ist, dass sie von dem Netzwerkknoten (110) in einem drahtlosen Netzwerk (100) bedient wird, wobei die UE (121) so ausgelegt ist, dass sie in einem Niedrigleistungszustand arbeitet, und die UE (121) ferner zu Folgendem konfiguriert ist:

Empfangen einer ersten WUS-Nachricht, die von einem Netzwerkknoten (110) per Broadcast gesendet wird, wobei die erste WUS-Nachricht so ausgelegt ist, dass sie mindestens einen ersten vorbereiteten WUS-Datensatz aus einem Satz WUS-Datensätzen umfasst, wobei jeder WUS-Datensatz eine Identität umfasst, die einer UE in der Gruppe von UEs (121, 122) zugeordnet ist, wobei ein Header der ersten WUS-Nachricht so ausgelegt ist, dass er eine Angabe umfasst, die angibt, dass eine nachfolgende WUS-Nachricht von der Gruppe von UEs (121, 122) decodiert werden soll,
Decodieren der ersten WUS-Nachricht, wobei das Decodieren so ausgelegt ist, dass es Bestimmen umfasst, ob die Kennung in dem ersten WUS-Datensatz der UE zugeordnet ist,
bei Bestimmen, dass die Identität der UE (121) zugeordnet ist, Aufwachen und Durchführen einer ersten Aktion, die mit dem Empfang einer WUS-Nachricht assoziiert ist, wobei das Aufwachen ferner so ausgelegt ist, dass es Unterlassen des Decodierens jeglicher nachfolgender WUS-Nachricht umfasst,
bei Bestimmen, dass die Identität nicht der UE (121) zugeordnet ist, Decodieren nacheinander einer Anzahl von nachfolgenden WUS-Nachrichten, die von dem Netzwerkknoten (110) per Broadcast gesendet werden, wobei jede jeweilige nachfolgende WUS-Nachricht so ausgelegt ist, dass sie mindestens einen jeweiligen vorbereiteten nachfolgenden WUS-Datensatz aus dem Satz von WUS-Datensätzen und einen jeweiligen Header umfasst, der so ausgelegt ist, dass er eine Angabe umfasst, die so ausgelegt ist, dass sie angibt, ob eine weitere nachfolgende WUS-Nachricht von der Gruppe von UEs (121, 122) decodiert werden soll oder nicht, wobei die Angabe in der letzten nachfolgenden WUS-Nachricht so ausgelegt ist, dass sie angibt, dass keine weiteren nachfolgenden WUS-Nachrichten decodiert werden sollen, wobei das Decodieren so ausgelegt ist, dass es Bestimmen nacheinander, ob die Kennung in den jeweiligen WUS-Datensätzen der UE (121) zugeordnet ist, und Durchführen einer zweiten Aktion basierend darauf umfasst, ob die Kennung der UE (121) zugeordnet ist,
wobei die erste WUS-Nachricht und die Anzahl von nachfolgenden WUS-Nachrichten so ausgelegt sind, dass sie bei derselben WUS-Gelegenheit per Broadcast gesendet werden.

**14.** UE (121) nach Anspruch 13, wobei die UE so ausgelegt ist, dass sie das Verfahren nach einem der Ansprüche 6-10 durchführt.

## Revendications

**1.** Procédé réalisé par un nœud de réseau (110) pour diffuser un message de signal de réveil, WUS, pour réveiller des équipements utilisateurs, UE, dans un groupe d'UE (121, 122), dans lequel le groupe d'UE (121, 122) est desservi par le nœud de réseau (110) dans un réseau de communication sans fil (100), le procédé comprenant :

*la préparation* (501) d'un ensemble d'enregistrements WUS, chaque enregistrement WUS comprenant une identité liée à un UE dans le groupe d'UE (121, 122),
*la diffusion* (502) d'un premier message WUS au groupe d'UE (121, 122), le premier message WUS comprenant au moins un premier enregistrement WUS préparé parmi l'ensemble d'enregistrements WUS, dans lequel un en-tête du premier message WUS comprend une indication indiquant qu'un message WUS suivant doit être décodé par le groupe d'UE (121, 122),
*la diffusion* (503) l'un après l'autre d'un certain nombre de messages WUS suivants au groupe d'UE (121, 122), dans lequel chaque message WUS suivant respectif comprend au moins un enregistrement WUS suivant préparé respectif parmi l'ensemble d'enregistrements WUS et un en-tête respectif comprenant une indication indiquant si un autre message WUS suivant doit ou non être décodé par le groupe d'UE (121, 122), dans lequel l'indication dans le dernier message WUS suivant indique qu'aucun autre message WUS suivant ne doit être décodé,
dans lequel le premier message WUS et le nombre de messages WUS suivants sont diffusés dans la même occasion WUS.

**2.** Procédé selon la revendication 1, dans lequel l'identité liée à un UE (121) comprend l'une quelconque parmi :

- une identité d'un UE (121) spécifique dans le groupe d'UE (121), ou
- une identité associée à un sous-groupe d'UE (121) dans le groupe d'UE (121).

**3.** Procédé selon l'une quelconque des revendications 1 et 2, dans lequel un message WUS comprend une pluralité d'enregistrements WUS préparés.

**4.** Procédé selon la revendication 3, dans lequel l'en-tête d'un message WUS comprenant une pluralité d'enregistrements WUS préparés comprend une indication indiquant le nombre d'enregistrements WUS préparés compris dans le message WUS.

**5.** Procédé réalisé par un équipement utilisateur, UE, (121) pour recevoir un message de signal de réveil, WUS, pour réveiller des UE dans un groupe d'UE (121, 122), dans lequel le groupe d'UE (121, 122) est desservi par le nœud de réseau (110) dans un réseau de communication sans fil (100), l'UE (121) fonctionnant dans un état à faible consommation d'énergie, le procédé comprenant :

*la réception* (601) d'un premier message WUS diffusé par un nœud de réseau (110), le premier message WUS comprenant au moins un premier enregistrement WUS préparé parmi un ensemble d'enregistrements WUS, chaque enregistrement WUS comprenant une identité liée à un UE dans le groupe d'UE (121, 122), dans lequel un en-tête du premier message WUS comprend une indication indiquant qu'un message WUS suivant doit être décodé par le groupe d'UE (121, 122),
*le décodage* (602) du premier message WUS, le *décodage* (602) comprenant la *détermination* si l'identifiant dans le premier enregistrement WUS est lié à l'UE (121),
lors de la détermination que l'identité est liée à l'UE (121), le *réveil* (603) et la réalisation d'une première action associée à la réception d'un message WUS, dans lequel le *réveil* (603) comprend en outre l'abstention de décodage de tout message WUS suivant,
lors de la détermination que l'identité n'est pas liée à l'UE (121), le *décodage* (604) l'un après l'autre d'un certain nombre de messages WUS suivants diffusés par le nœud de réseau (110), dans lequel chaque message WUS suivant respectif comprend au moins un enregistrement WUS suivant préparé respectif parmi l'ensemble d'enregistrements WUS et un en-tête respectif comprenant une indication indiquant si un autre message WUS suivant doit ou non être décodé par le groupe d'UE (121, 122), dans lequel l'indication dans le dernier message WUS suivant indique qu'aucun autre message WUS suivant ne doit être décodé, le décodage

comprenant la *détermination* l'un après l'autre si l'identifiant dans les enregistrements WUS respectifs est lié à l'UE (121) et, sur la base du fait que l'identifiant est lié à l'UE (121), la réalisation d'une deuxième action,
dans lequel le premier message WUS et le nombre de messages WUS suivants sont adaptés pour être diffusés dans la même occasion WUS.

**6.** Procédé selon la revendication 5, dans lequel la réalisation de la deuxième action comprend l'un quelconque parmi :

- le réveil et la réalisation de la première action associée à la réception d'un message WUS et l'abstention de décodage de tout message WUS suivant,
- le décodage d'un autre message WUS suivant, ou
- le maintien dans l'état à faible consommation d'énergie.

**7.** Procédé selon l'une quelconque des revendications 5 et 6, dans lequel, lors de la détermination que l'identifiant compris dans le dernier enregistrement WUS suivant n'est pas lié à l'UE (121), le maintien dans l'état à faible consommation d'énergie.

**8.** Procédé selon l'une quelconque des revendications 5 à 7, dans lequel l'identité liée à un UE (121) comprend l'une quelconque parmi :

- une identité d'un UE (121) spécifique dans le groupe d'UE (121), ou
- une identité associée à un sous-groupe d'UE (121) dans le groupe d'UE (121).

**9.** Procédé selon l'une quelconque des revendications 5 à 8, dans lequel un message WUS comprend une pluralité d'enregistrements WUS préparés.

**10.** Procédé selon la revendication 9, dans lequel l'en-tête d'un message WUS comprenant une pluralité d'enregistrements WUS préparés comprend une indication indiquant le nombre d'enregistrements WUS préparés compris dans le message WUS.

**11.** Nœud de réseau (110) configuré pour diffuser un message de signal de réveil, WUS, pour réveiller des équipements utilisateurs, UE, dans un groupe d'UE (121, 122), dans lequel le groupe d'UE (121, 122) est desservi par le nœud de réseau (110) dans un réseau de communication sans fil (100), le nœud de réseau (110) étant en outre configuré pour :

*préparer* un ensemble d'enregistrements WUS, chaque enregistrement WUS étant adapté pour comprendre une identité liée à un UE dans le groupe d'UE (121, 122),
*diffuser* un premier message WUS au groupe d'UE (121, 122), le premier message WUS étant adapté pour comprendre au moins un premier enregistrement WUS préparé parmi l'ensemble d'enregistrements WUS, dans lequel un en-tête du premier message WUS est adapté pour comprendre une indication adaptée pour indiquer qu'un message WUS suivant doit être décodé par le groupe d'UE (121, 122),
*diffuser* l'un après l'autre un certain nombre de messages WUS suivants au groupe d'UE (121, 122), dans lequel chaque message WUS suivant respectif est adapté pour comprendre au moins un enregistrement WUS suivant préparé respectif parmi l'ensemble d'enregistrements WUS et un en-tête respectif adapté pour comprendre une indication adaptée pour indiquer si un autre message WUS suivant doit ou non être décodé par le groupe d'UE (121, 122), dans lequel l'indication dans le dernier message WUS suivant est adaptée pour indiquer qu'aucun autre message WUS suivant ne doit être décodé,
dans lequel le premier message WUS et le nombre de messages WUS suivants sont adaptés pour être diffusés dans la même occasion WUS.

**12.** Nœud de réseau (110) selon la revendication 11, dans lequel le nœud de réseau est adapté pour réaliser le procédé selon l'une quelconque des revendications 2 à 4.

**13.** Equipement utilisateur, UE, (121) configuré pour recevoir un message de signal de réveil, WUS, pour réveiller des UE dans un groupe d'UE (121, 122), dans lequel le groupe d'UE (121, 122) est adapté pour être desservi par le nœud de réseau (110) dans un réseau de communication sans fil (100), l'UE (121) étant adapté pour fonctionner dans un état à faible consommation d'énergie, l'UE (121) étant en outre configuré pour :

*recevoir* un premier message WUS diffusé par un nœud de réseau (110), le premier message WUS étant adapté pour comprendre au moins un premier enregistrement WUS préparé parmi un ensemble d'enregistrements

WUS, chaque enregistrement WUS comprenant une identité liée à un UE dans le groupe d'UE (121, 122), dans lequel un en-tête du premier message WUS est adapté pour comprendre une indication indiquant qu'un message WUS suivant doit être décodé par le groupe d'UE (121, 122),

*décoder* le premier message WUS, dans lequel le fait de *décoder* est adapté pour comprendre le fait de *déterminer* si l'identifiant dans le premier enregistrement WUS est lié à l'UE,

lors de la détermination que l'identité est liée à l'UE *(121), réveiller* et réaliser une première action associée à la réception d'un message WUS, dans lequel le fait de *réveiller* est en outre adapté pour comprendre le fait de s'abstenir de décoder tout message WUS suivant,

lors de la détermination que l'identité n'est pas liée à l'UE (121), *décoder* l'un après l'autre un certain nombre de messages WUS suivants diffusés par le nœud de réseau (110), dans lequel chaque message WUS suivant respectif est adapté pour comprendre au moins un enregistrement WUS suivant préparé respectif parmi l'ensemble d'enregistrements WUS et un en-tête respectif adapté pour comprendre une indication adaptée pour indiquer si un autre message WUS suivant doit ou non être décodé par le groupe d'UE (121, 122), dans lequel l'indication dans le dernier message WUS suivant est adaptée pour indiquer qu'aucun autre message WUS suivant ne doit être décodé, dans lequel le fait de décoder est adapté pour comprendre le fait de *déterminer* l'un après l'autre si l'identifiant dans les enregistrements WUS respectifs est lié à l'UE (121) et, sur la base du fait que l'identifiant est lié à l'UE (121), la réalisation d'une deuxième action,

dans lequel le premier message WUS et le nombre de messages WUS suivants sont adaptés pour être diffusés dans la même occasion WUS.

**14.** UE (121) selon la revendication 13, dans lequel l'UE est adapté pour réaliser le procédé selon l'une quelconque des revendications 6 à 10.

W
U
S
PO
W
U
S
PO
W
U
S
PO

Fig. 1

WUS
PO
Configured maximum WUS duration
Gap

Fig. 2

timeoffsetDRX
timeoffset-eDRX-Long
WUS
WUS
PDCCH
PDSCH
PO

Fig. 3

DN
170
100
CN
RAN
110
121
122

Fig. 4

501. Prepare set of WUS records, each WUS record comprising identity related UE in group of UEs.

502. Broadcast first WUS message to group of UEs, which first WUS message comprises at least one first prepared WUS record out of set of WUS records, wherein header in first WUS message comprises indication indicating subsequent WUS to be decoded.

503. Broadcast one by one, number of subsequent WUS messages to group of UEs, each respective subsequent WUS message comprises at least one respective prepared WUS record out of set of WUS records and respective header comprising comprises indication indicating subsequent WUS to be decoded.

Fig. 5

601. Receive first WUS message broadcasted by network node, which first WUS message comprises at least one first prepared WUS record out of set of WUS records, a header in first WUS message comprises indication indicating subsequent WUS to be decoded.

602. Decode first WUS message, which decoding comprises determining whether the identifier in the first WUS record is related to the UE.

603. Wake up and perform a first action associated to receiving a WUS message, wherein waking up further comprises refraining from decoding any subsequent WUS message.

604. Decoding one by one, number of subsequent WUS messages broadcasted by the network node, which decoding comprises determining one by one, whether identifier in respective WUS records is related to UE, and based on whether identifier is related to UE perform second action

Fig. 6

WUS record
N bits
1 bits
WUS occasion start
WUS occasion start
WUS occasion start
WUR duty-cycle
WUR duty-cycle

Fig. 7

S
W
F
[1] [01] [1]
WUR SS
WUS record
S
W
F
[1] [01] [1]
WUS record
S
W
F
[1] [10] [1]
WUR SS
WUS record
WUS record
WUR duty-cycle
WUS occasion start
WUS occasion stop

Fig. 8

WUS Occasion start
123
456
789
ABC
5G-S-TMSI =
123 456 789 ABC
UE A
All payloads match. Wake up.
5G-S-TMSI =
123 AAA BBB CCC
UE B
WUS payload matches, decode next WUS.
WUS payload does not match. Stop decoding.

Fig. 9

WUS Occasion start
UE A
UE B
123
456
789
ABC
123
AAA
AAA
AAA
5G-S-TMSI =
123 456 789 ABC
UE A
All payloads match. Wake up.
5G-S-TMSI =
123 AAA AAA AAA
UE B
5G-S-TMSI =
123 BBB BBB BBB
UE C
WUS payload matches, decode next WUS.
WUS payload does not match. Stop decoding.
Re-start decoding here as new UE ID begins.
No WUS detected.

Fig. 10

Computer program 1130
Carrier 1140
Memory 1120
Processor 1110
Input/Output Interface 1100
Network node 110

Fig. 11

Computer program 1230
Carrier 1240
Memory 1220
Processor 1210
Input/Output Interface 1200
UE 121

Fig. 12

3221
3250
3220
3210
3212c
3213c
3214
3211
3230
3222
3215
3212b
3213b
3291
3213a
3292
3212a

Fig. 13

3300
3310 Host computer
3311
SW
3312
Host application
3315
HW
3316
Communication interface
3318
Processing circuiry
3360
3320 Base station
3321
SW
3325
HW
3326
Communication interface
3327
Radio interface
3328
Processing circuitry
3330 UE
3331
SW
3332
Client application
3335
HW
3337
Radio interface
3338
Processing circuitry
3350
3370

Fig. 14

BEGIN
3410
Host computer provides user data
3411
Host computer executes host application
3420
Host computer initiates transmission carrying the user data to the UE
3430
Base station transmits the user data
3440
UE executes client application
END
BEGIN
3510
Host computer provides user data
3520
Host computer initiates transmission carrying the user data to the UE
3530
UE receives the user data
END

Fig. 15

Fig. 16

BEGIN
3610
UE receives input data provided at host computer
3611
UE executes client application
3620
UE provides user data
3621
UE executes client application
3630
UE initiates transmission of the user data to the host computer
3640
Host computer receives user data transmitted from the UE
END
BEGIN
3710
Base station receives user data from UE
3720
Base station initiates transmission of user data to the host computer
3730
Host computer receives the user data
END

Fig. 17

Fig. 18

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 110536382 B